# EUROPEAN PATENT APPLICATION

(11) **EP 4 787 034 A1**
(43) Date of publication of application: **05.08.2026**
(21) Application number: 26155659.1
(22) Date of filing: 02.02.2026
(51) Int. Cl.: G02B 6/35

(54) **PHOTONIC CIRCUIT WITH IMPROVED RELIABILITY OF DATA TRANSMISSION**

(30) Priority: 03.02.2025 KR 20250013282
(71) Applicant: Opticis Co., Ltd., Seongnam-si, Gyeonggi-do 13354 (KR)
(72) Inventor: KIM, Hee Dae, Gwangju (KR)
(74) Representative: Lavoix

(57) **Abstract**

According to the disclosure, multiple communication channels may be provided in a single optical waveguide through wavelength division multiplexing, and by combining a primary channel including image signals which are optical signals transmitted in different transmission rates and at a relatively high transmission rate and an auxiliary channel including auxiliary signals transmitted at a relatively low transmission rate for setting the primary channel, the signals may be transmitted through the same optical waveguide, and accordingly, it is possible to solve a sensitivity problem in a high-speed serial link that a receiver may not detect signals because peaks values of the signals are attenuated and widths of the signals are widely spread due to distortion of the transmitted signals, intersymbol interference (ISI), delay dispersion, and impedance mismatch. By assigning a wavelength band adjacent to a central wavelength band in which a single peak is formed to a high-speed channel in a profile of an optical gain or optical loss of an optical waveguide, and assigning a wavelength band relatively far from the central wavelength band to a low-speed channel where signal attenuation caused in the high-speed serial link is relatively less, it is possible to provide multiple communication channels of different wavelengths to a single optical waveguide, accurately detect or recognize signals by solving a problem of signal attenuation and so on in a high-speed serial link, and provide a sufficient wavelength separation bandwidth for preventing cross-talk between different communication channels. Also, in an embodiment, by providing a total of six communication channels, which include four primary channels (high-speed channels) including video signals transmitted between a display source and a display sink and two auxiliary channels (low-speed channels) including auxiliary signals for setting the primary channels, to different optical waveguides each of which includes two high-speed channels and one low-speed channel, by assigning the two high-speed channels around a central wavelength band forming a single peak respectively to a wavelength band adjacent to the central wavelength band and a wavelength band far from the central wavelength band in a profile of an optical gain or optical loss of an optical waveguide, and by assigning the one low-speed channel to a region, in which the wavelength band of the high-speed channel closer to the central wavelength band is located, among the left half region and the right half region of the central wavelength band, it is possible to accurately detect or recognize signals by solving a problem of signal attenuation in a high-speed serial link and to provide a sufficient wavelength separation bandwidth for preventing cross-talk between communication channels of different wavelength bands.

## Description

### CROSS-REFERENCE TO RELATED APPLICATION

This application is based on and claims priority under 35 U.S.C. §119 to Korean Patent Application No. 10-2025-0013282, filed on February 03, 2025, in the Korean Intellectual Property Office, the disclosure of which is incorporated by reference herein in its entirety.

### BACKGROUND

### 1. Field

The disclosure relates to a photonic circuit, and more particularly, to a photonic circuit for distributing or routing image data and auxiliary data related to establishment of a channel for transmitting the image data between at least one display source and at least one display sink using optical signals.

### 2. Description of the Related Art

Methods for implementing data routing between multiple inputs and outputs, such as an Ethernet switch that uses electrical signals to implement data routing or distribution, have a problem of heat generation during switching of electrical signals and the relatively large energy consumption resulting therefrom. Recently, research has been conducted on photonic circuits that transmit or route data by using optical signals rather than electrical signals as a medium for information transmission.

### SUMMARY

According to an embodiment, a photonic circuit may transmit optical signals of different wavelengths through a single optical waveguide from wavelength division multiplexing and improve the reliability of data transmission by avoiding the difficulty of signal detection or recognition due to signal attenuation in high-speed serial links and securing sufficient wavelength separation bandwidth securing sufficient wavelength separation bandwidth to suppress cross-talk between different optical signals.

Additional aspects will be set forth in part in the description which follows and, in part, will be apparent from the description, or may be learned by practice of the presented embodiments of the disclosure.

According to an aspect of the disclosure, a photonic circuit includes an optical fiber configured to transmit an optical signal, an input port forming a transmitting end, an output port forming a receiving end opposite to the transmitting end, and an optical waveguide network connecting the input port to the output port, which are coupled to the optical fiber, and a coupler switch configured to control transmission of optical power or optical coupling between a first optical waveguide and a second optical waveguide which are adjacent to each other and form the optical waveguide network and to control coupling efficiency of a signal between the first optical waveguide and the second optical waveguide to transmit different optical powers in one of states including a through-state or a bar state in which there is substantially no crossing of optical power between the first optical waveguide and the second optical waveguide, a dividing (splitting) state or a partial coupling state corresponding to partial remaining and partial crossing of optical power between the first optical waveguide and the second optical waveguide, and a drop state or a cross state corresponding to full crossing of optical power between the first optical waveguide and the second optical waveguide. The first optical waveguide includes a pair of a 1^{st}-1 optical waveguide and a 1^{st}-2 optical waveguide, and the second optical waveguide includes a pair of a 2^{nd}-1 optical waveguide and a 2^{nd}-2 optical waveguide, at least one optical waveguide among the 1^{st}-1 optical waveguide, the 1^{st}-2 optical waveguide, the 2^{nd}-1 optical waveguide, and the 2^{nd}-2 optical waveguide has a profile of an optical gain or optical loss with a full-width at half maximum (FWHM) that is attenuated to half a peak value of a central wavelength band on both sides of the central wavelength band forming a single peak, and the at least one optical waveguide transmits different optical signals of different wavelength bands separated from each other with a wavelength separation bandwidth between the wavelength bands considering a resolution for separation between the different wavelength bands forming different communication channels to prevent cross-talk within a wavelength range forming the FWHM.

For example, the resolution for separation between the different wavelength bands forming the different communication channels may correspond to a resolution of a wavelength selection filter for separating the different wavelength bands transmitted from the at least one waveguide, or a value obtained by adding a tolerance to the resolution of the wavelength selection filter.

For example, the at least one optical waveguide may transmit optical signals of different wavelength bands forming a high-speed channel and a low-speed channel with different transmission rates.

For example, the optical signals transmitted together through the at least one optical waveguide may form a high-speed channel with a relatively high transmission rate and a low-speed channel with a relatively low transmission rate, and in the profile of the optical gain or optical loss of the optical waveguide, a wavelength band of an optical signal assigned to the high-speed channel may be relatively close to the central wavelength band having a peak value and have a low attenuation rate, and a wavelength band of an optical signal assigned to the low-speed channel may be relatively far from the central wavelength band having the peak value and have a high attenuation rate.

For example, the at least one optical waveguide may transmit three optical signals of different wavelength bands separated from each other with a wavelength separation bandwidth between the different wavelength bands within a wavelength range forming the FWHM.

For example, the three optical signals transmitted through the at least one optical waveguide may form a first high-speed channel and a second high-speed channel with relatively high transmission rates, and a low-speed channel with a relatively low transmission rate, and in the profile of the optical gain or optical loss of the optical waveguide, a wavelength band of the optical signal assigned to the second high-speed channel may be closest to the central wavelength band having the peak value and have a lowest attenuation rate, a wavelength band of the optical signal assigned to the low-speed channel may be far from the central wavelength band and have a highest attenuation rate, and a wavelength band of the optical signal assigned to the first high-speed channel may be farther from the central wavelength band than the wavelength band of the optical signal assigned to the second high-speed channel and may be closer than the wavelength band of the optical signal assigned to the low-speed channel and has an intermediate attenuation rate.

For example, he wavelength band of the optical signal assigned to the first high-speed channel, the wavelength band of the optical signal assigned to the second high-speed channel, and the wavelength band of the optical signal assigned to the low-speed channel may be assigned to positions asymmetrical with respect to the central wavelength band, the wavelength band of the optical signal assigned to the second high-speed channel and the wavelength band of the optical signal assigned to the low-speed channel may be assigned to a wavelength range of one of a left half region and a right half region around the central wavelength band having the peak value, and the wavelength band of the optical signal assigned to the first high-speed channel may be assigned to a wavelength range of another region of the left half region and the right half region around the central wavelength band having the peak value.

For example, the at least one optical waveguide may transmit both video signals including video data and forming the first high-speed channel and the second high-speed channel with relatively high transmission rates, and auxiliary signals forming the low-speed channel with a relatively low transmission rate and including auxiliary data.

For example, each of the 1^{st}-1 optical waveguide and the 1^{st}-2 optical waveguide may transmit two high-speed channels with a relatively high transmission rate and one low-speed channel with a relatively low transmission rate, and the 1^{st}-1 optical waveguide and the 1^{st}-2 optical waveguide may form a total of six communication channels including four high-speed channels for video signals and two low-speed channels for auxiliary signals between a display source and a display sink, and each of the 2^{nd}-1 optical waveguide and the 2^{nd}-2 optical waveguide may transmit two high-speed channels with a relatively high transmission rate and one low-speed channel with a relatively low transmission rate, and the 2^{nd}-1 optical waveguide and the 2^{nd}-2 optical waveguide may form a total of six communication channels including four high-speed channels for other video signals and two low-speed channels for other auxiliary signals between another display source and another display sink.

For example, each of the 1^{st}-1 optical waveguide and the 1^{st}-2 optical waveguide may transmit two high-speed channels with a relatively high transmission rate and one low-speed channel with a relatively low transmission rate, and the 1^{st}-1 optical waveguide and the 1^{st}-2 optical waveguide may form a total of six communication channels including four high-speed channels for video signals input from the display source and two low-speed channels for auxiliary signals input from the display source, and each of the 2^{nd}-1 optical waveguide and the 2^{nd}-2 optical waveguide may transmit two high-speed channels with a relatively high transmission rate and one low-speed channel with a relatively low transmission rate, and the 2^{nd}-1 optical waveguide and the 2^{nd}-2 optical waveguide may form a total of six communication channels including four high-speed channels for video signals output to the display sink and two low-speed channels for other auxiliary signals output to the display sink.

For example, the optical waveguide network may be a 2Nx2N optical waveguide network that maps 2N input ports to 2N output ports, the input port and a display source may form a 2:1 connection such that video signals and auxiliary signals output from N display sources are input to the 2N input ports, the output port and a display sink may form a 2:1 connection such that video signals and auxiliary signals from the 2N output ports are output to N display sinks, and a pair of a video signal and an auxiliary signal input through the input ports connected to a same display source may be routed or distributed to the output ports connected to a same display sink, according to a control signal applied to the coupler switch to implement transmission of different optical powers between the first optical waveguide and the second optical waveguide adjacent to each other between the input port and the output port.

For example, both transmission of optical power crossing between the 1^{st}-1 optical waveguide and the 2^{nd}-1 optical waveguide and transmission of optical power crossing between the 1^{st}-2 optical waveguide and the 2^{nd}-2 optical waveguide may be controlled by the same coupler switch.

For example, an input port and an output port, which are provided respectively on a first side and a second side facing each other and included in a base substrate on which the optical waveguide network is formed, may be connected to each other by the optical waveguide network, and the first optical waveguide and the second optical waveguide may include coupling sections extending from the input port toward the output port and extending parallel at a relatively close position, and phase shift sections extending parallel at a relatively far position.

For example, in each of the phase shift sections, a coupler switch may be formed on at least one of the first optical waveguide and the second optical waveguide to set a voltage that induces a phase difference or phase mismatch between the first optical waveguide and the second optical waveguide by applying an external electric field.

For example, in each of the coupling sections, transmission or optical coupling efficiency of optical power crossing between the first optical waveguide and the second optical waveguide may be differentially formed according to a phase difference or phase mismatch between the first optical waveguide and the second optical waveguide which is caused by a voltage set by the coupler switch in the phase shift section.

For example, the coupler switch may receive a first coupler control bit and a second coupler control bit for applying voltages of three different levels to cause the phase differences or phase mismatch between the first optical waveguide and the second optical waveguide to implement transmission of different optical powers in the through-state or the bar state in which there is substantially no crossing, the dividing state or the partial coupling state corresponding to the partial remaining and the partial crossing, and the drop state or the cross state corresponding to the full crossing, between the first optical waveguide and the second optical waveguide.

For example, depending on voltages set by the coupler switch, i) when a zero voltage is set by the coupler switch, transmission of optical power in the drop state or the cross state corresponding to the full crossing of the optical power may be implemented between the first optical waveguide and the second optical waveguide from the input port to the output port, ii) when a maximum voltage is set by the coupler switch, transmission of optical power in the through-state or the bar state with substantially no crossing of the optical power may be implemented between the first optical waveguide and the second optical waveguide from the input port to the output port, and iii) when a voltage between the zero voltage and the maximum voltage is set by the coupler switch, transmission of the optical power in the dividing state corresponding to the partial remaining and the partial crossing of the optical power may be implemented between the first optical waveguide and the second optical waveguide from the input port to the output port.

For example, when each of the first coupler control bit and the second coupler control bit is bit 0, transmission of optical power in the drop state or the cross state corresponding to the full crossing of the optical power may be implemented between the first optical waveguide and the second optical waveguide from the input port to the output port while achieving phase matching, when the first coupler control bit is bit 1 and the second coupler control bit is bit 0, transmission of optical power in the dividing state or the partial coupling state corresponding to the partial remaining and the partial crossing of the optical power may be implemented between the first optical waveguide and the second optical waveguide from the input port to the output port while achieving a phase mismatch for blocking partial transmission of the optical power, and when each of the first coupler control bit and the second coupler control bit is bit 1, transmission of optical power in the through-state or the bar state with substantially no crossing of the optical power may be implemented between the first optical waveguide and the second optical waveguide while achieving a phase mismatch for blocking full transmission of the optical power between the first optical waveguide and the second optical waveguide from the input port to the output port.

For example, the optical waveguide network may be an NxN optical waveguide network that maps N input ports to N output ports, the 1^{st}-1 optical waveguide and the 2^{nd}-1 optical waveguide may extend adjacently between two different input ports among the N input ports and two different output ports among the N output ports, the 1^{st}-2 optical waveguide and the 2^{nd}-2 optical waveguide may extend adjacently between two other different input ports among the N input ports and two other different output ports among the N output ports, and a flow of the optical power crossing between the 1^{st}-1 optical waveguide and the 2^{nd}-1 optical waveguide and a flow of the optical power crossing between the 1^{st}-2 optical waveguide and the 2^{nd}-2 optical waveguide may be controlled together by the same coupler switch.

For example, an input port and an output port, which are provided respectively on a first side and a second side in contact with each other and crossing each other at an edge of a base substrate on which the optical waveguide network is formed, may be connected to each other by the optical waveguide network, and the optical waveguide network may include a coupler switch including a movable coupler that performs forward and reverse motions along an approaching direction toward an intersection point between the first optical waveguide and the second optical waveguide, or a retreating direction away from the intersection point to control the transmission or optical coupling efficiency of the optical power crossing between the first optical waveguide connected to the input port and the second optical waveguide connected to the output port.

For example, the movable coupler i) may implement the transmission of the optical power in the through-state or the bar state with substantially no crossing of the optical power between the first waveguide connected to the input port and the second waveguide connected to the output port at a first position farthest from the intersection point between the first optical waveguide and the second optical waveguide, ii) may implement the transmission of the optical power in the drop state or the cross state corresponding to the full crossing of the optical power between the first waveguide connected to the input port and the second waveguide connected to the output port at a third position closest to the intersection point between the first optical waveguide and the second optical waveguide, and iii) may implement the transmission of the optical power in the dividing sate or the partial coupling state corresponding to the partial remaining and the partial crossing of the optical power at a second position between the first position farthest from the intersection point and the third position closest to the intersection point.

For example, the coupler switch may receive a first coupler control bit and a second coupler control bit for applying control voltages of three different levels such that the movable coupler is set to the third position closest to the first position farthest from the intersection point between the first optical waveguide and the second optical waveguide.

For example, when each of the first coupler control bit and the second coupler control bit is bit 0, the movable coupler may be set to the first position farthest from the intersection point between the first optical waveguide and the second optical waveguide, when the first coupler control bit is bit 1 and the second coupler control bit is bit 0, the movable coupler may be set to the second position, and when each of the first coupler control bit and the second coupler control bit is bit 1, the movable coupler may be set to the third position closest to the intersection point.

For example, the movable coupler may include a first coupling rib extending parallel to the first optical waveguide to form evanescent coupling with the first optical waveguide, and a second coupling rib extending parallel to the second optical waveguide to form evanescent coupling with the second optical waveguide.

For example, an electric field leaking between the first optical waveguide and the movable coupler may have an amplitude that decreases from the first optical waveguide toward the movable coupler, and an electric field leaking between the second optical waveguide and the movable coupler may have an amplitude that decreases from the movable coupler toward the second optical waveguide.

### BRIEF DESCRIPTION OF THE DRAWINGS

The above and other aspects, features, and advantages of certain embodiments of the disclosure will be more apparent from the following description taken in conjunction with the accompanying drawings, in which:

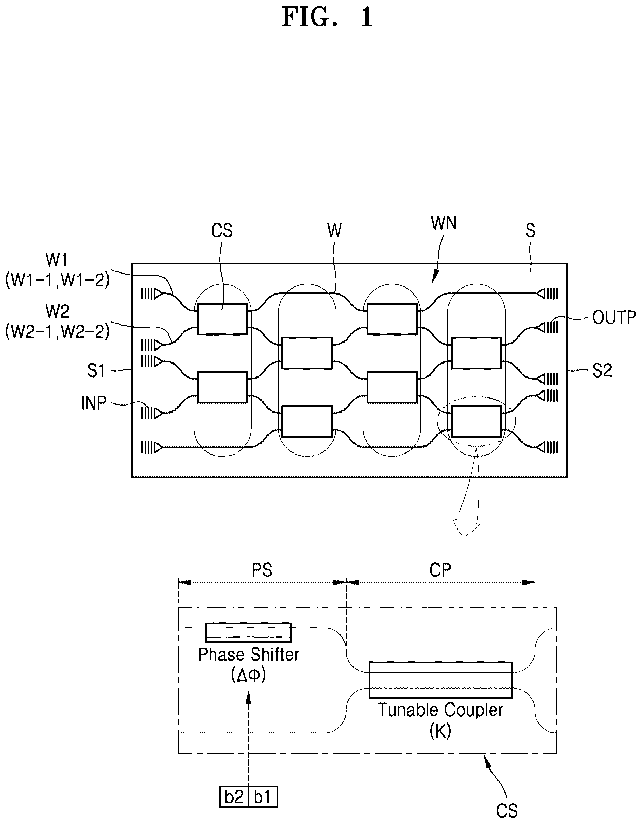

FIG. 1 is a diagram illustrating a configuration including an optical waveguide network connecting multiple input ports to multiple output ports, and multiple coupler switches for controlling transmission of different optical powers between adjacent optical waveguides forming the optical waveguide network to implement mapping established between the multiple input ports and the multiple output ports, according to a first type of the disclosure;

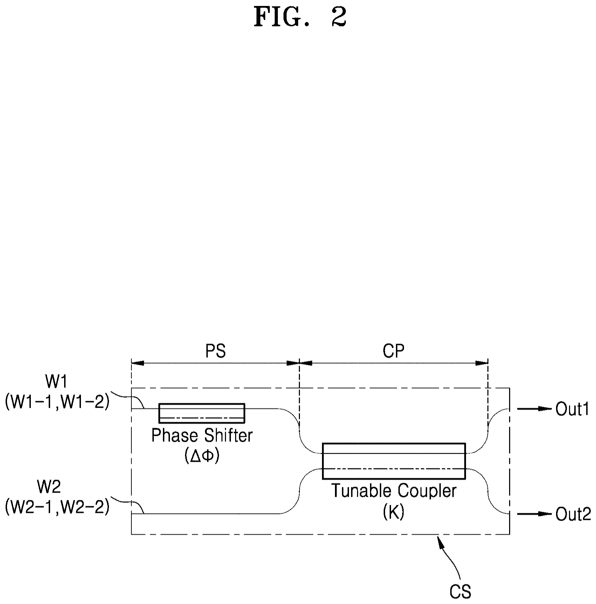

FIG. 2 is a diagram illustrating a configuration of the coupler switch including a phase shifter and a tunable coupler illustrated in FIG. 1;

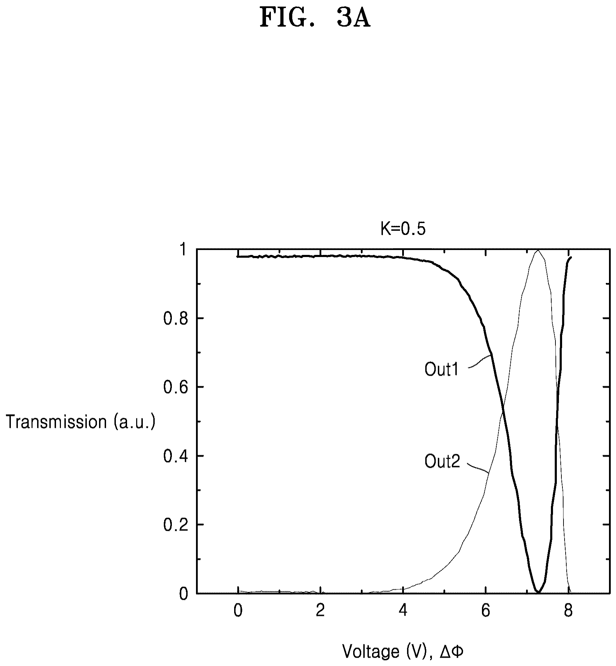

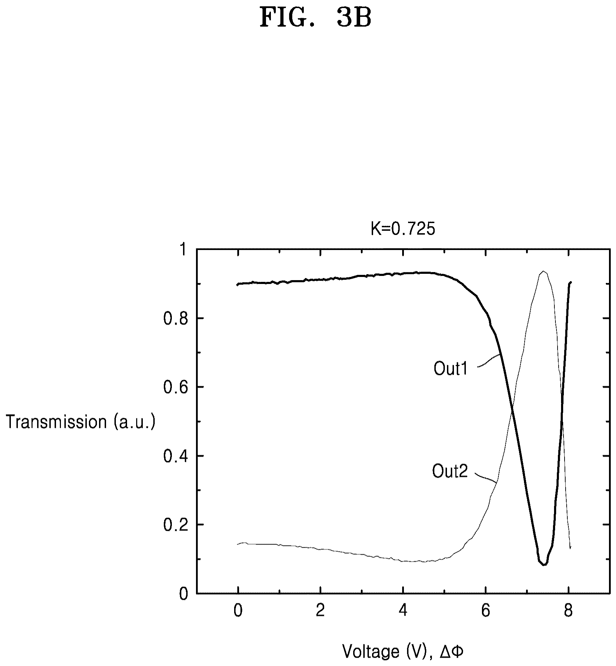

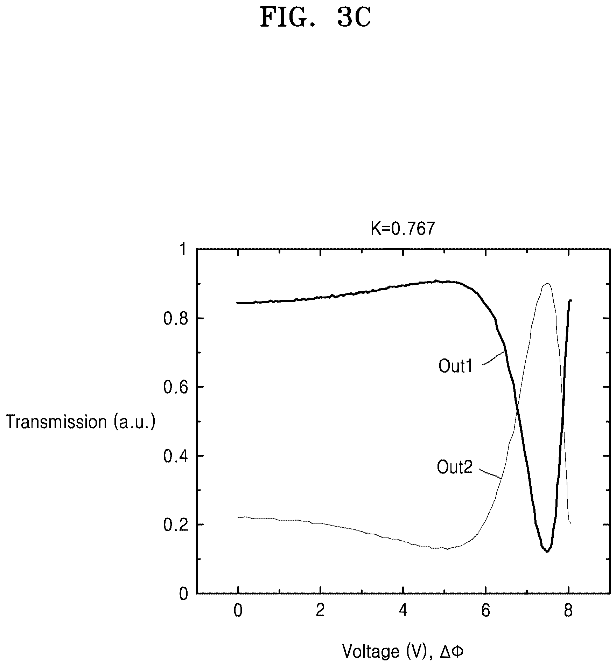

FIGS. 3A to 3C are diagrams each illustrating a ratio of optical powers (see FIG. 2) crossing between a first optical waveguide and a second optical waveguide depending on the magnitude of a voltage set by the coupler switch or a phase difference or phase mismatch caused between the first and second optical waveguides from the set voltage at different optical coupling efficiencies, and are different diagrams shown to illustrate a ratio of optical powers and (see FIG. 2) crossing between the first and second optical waveguides based on the phase difference or phase mismatch caused between the first and second optical waveguides from the magnitude of the set voltage set by the coupler switch at different optical coupling efficiencies;

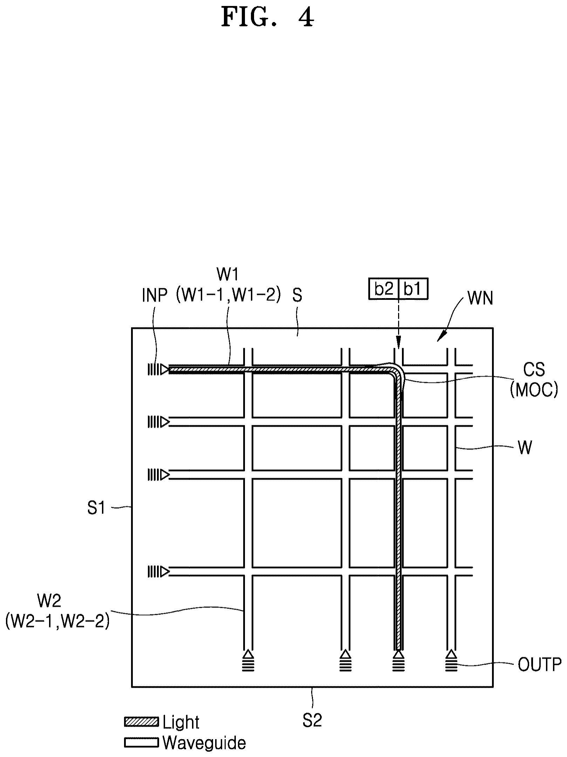

FIG. 4 is a diagram illustrating a configuration including an optical waveguide network connecting multiple input ports to multiple output ports and multiple coupler switches for controlling the transmission of different optical powers between adjacent optical waveguides forming the optical waveguide network to implement mapping between the multiple input ports and the multiple output ports, according to a second type of the disclosure;

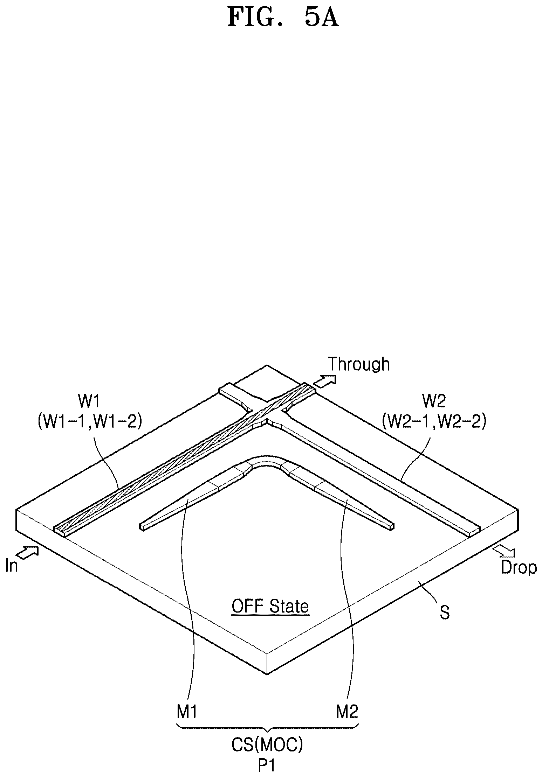

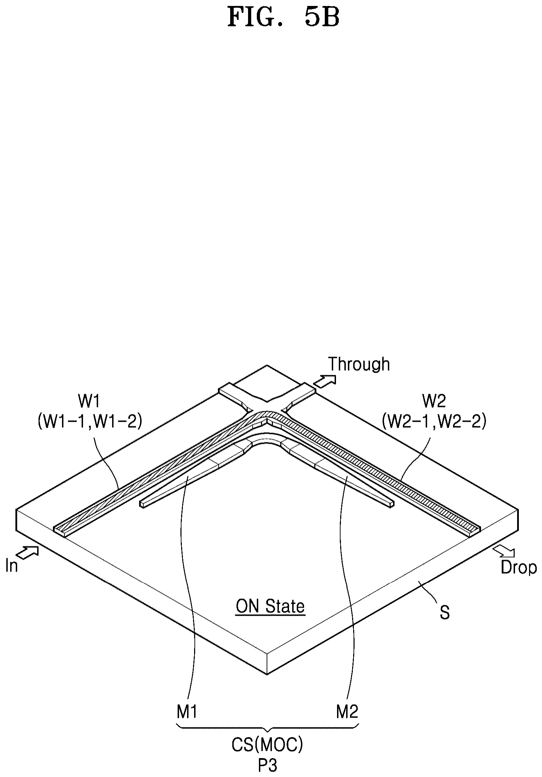

FIG. 5A and FIG. 5B are diagrams illustrating operations of the coupler switch that implements the transmission of different optical powers between adjacent optical waveguides forming the optical waveguide network at different first and third positions set in a movable coupler of the coupler switch illustrated in FIG. 4, and specifically, FIG. 5A illustrates a through or bar state or an OFF state of the coupler switch in which no crossing of optical power occurs between adjacent first and second optical waveguides at the first position of the movable coupler, and FIG. 5B illustrates a drop or cross state or an ON state of the coupler switch in which all optical powers cross between adjacent first and second optical waveguides at the third position of the movable coupler;

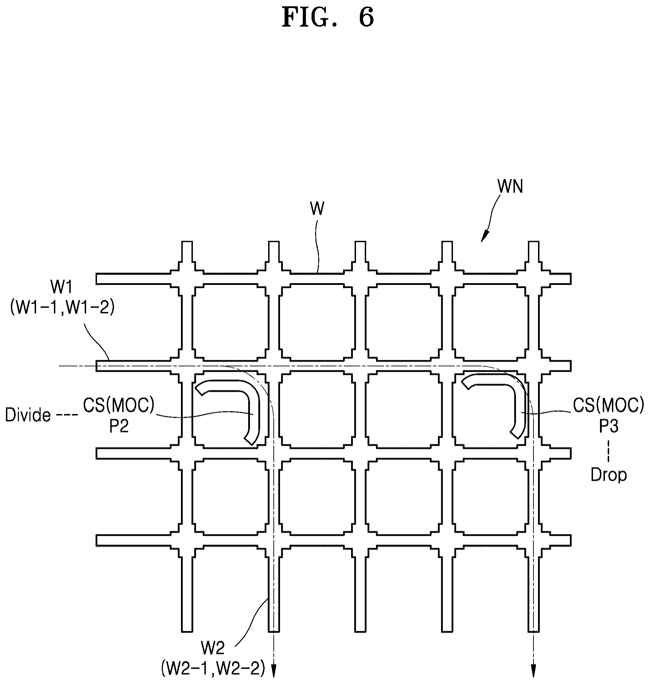

FIG. 6 is a diagram illustrating an operation of the coupler switch that implements the transmission of different optical powers between adjacent optical waveguides forming the optical waveguide network at different second and third positions set in the movable coupler of the coupler switch illustrated in FIG. 4, and illustrating a dividing or partial coupling state in which some of the optical powers remain and cross between adjacent first and second optical waveguides at the second position of the movable coupler, and a drop or cross state in which all optical powers crossing between the adjacent first and second optical waveguides at the third position of the movable coupler;

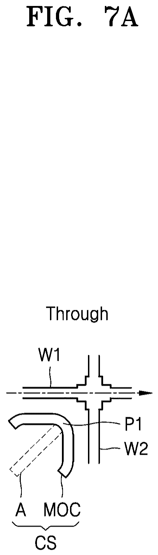

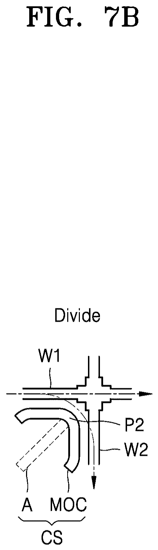

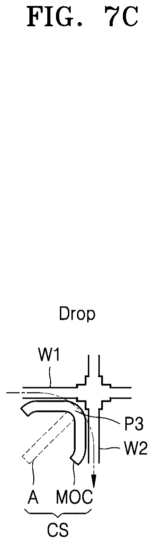

FIGS. 7A to 7C are diagrams illustrating operations of the coupler switch that implements the transmission of different optical powers between adjacent optical waveguides forming the optical waveguide network at different first, second, and third positions set in the movable coupler of the coupler switch illustrated in FIG. 4, and specifically, FIG. 7A illustrates a through or bar state in which no crossing of optical power occurs between adjacent first and second optical waveguides at the first position of the movable coupler, FIG. 7B illustrates a dividing or partial coupling state in which some of the optical powers remain and cross between the adjacent first and second optical waveguides at the second position, and FIG. 7C illustrates a drop or cross state in which all optical powers cross between the adjacent first and second optical waveguides at the third position of the movable coupler;

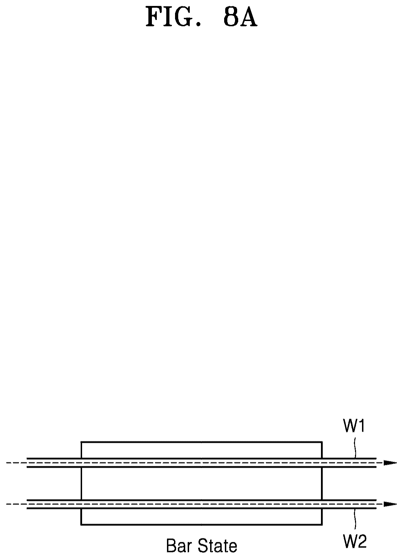

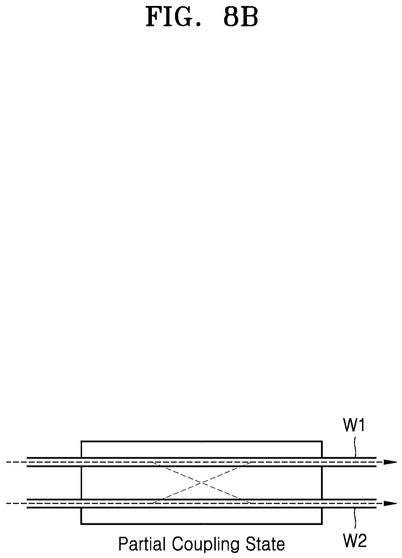

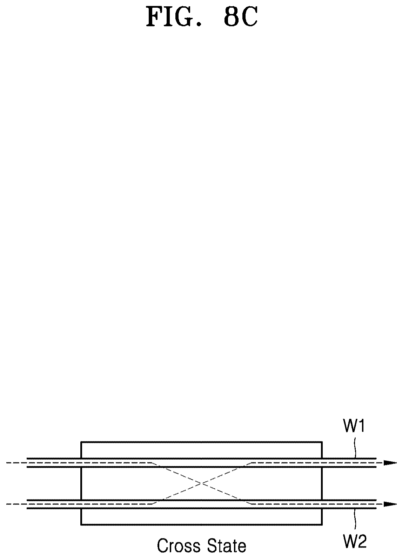

FIGS. 8A to 8C are diagrams illustrating three different states set by the coupler switch, that is, three different states regarding the transmission of optical powers crossing between adjacent first and second optical waveguides forming the optical waveguide network, and specifically, FIG. 8A illustrates a bar state in which there is no transmission of optical powers between the first and second optical waveguides, FIG. 8B illustrates a partial coupling state in which some of the optical powers remain and cross between the first and second optical waveguides, and FIG. 8C illustrates a cross state in which all optical powers cross between the first and second optical waveguides;

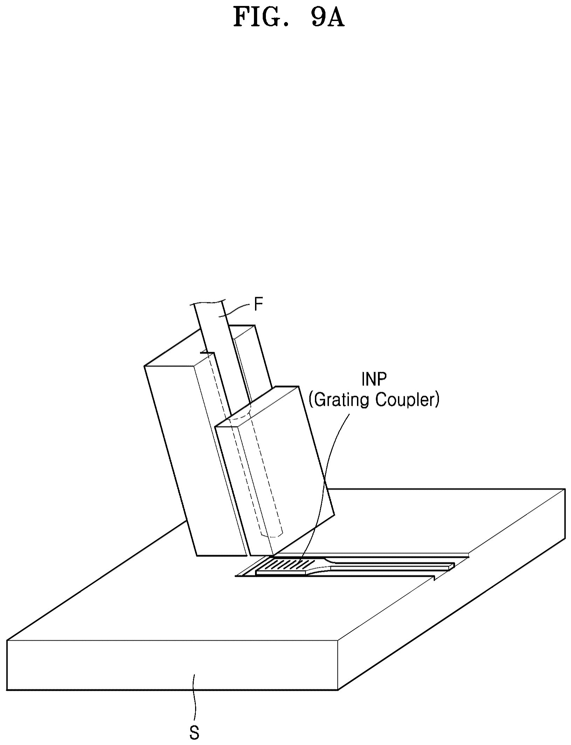

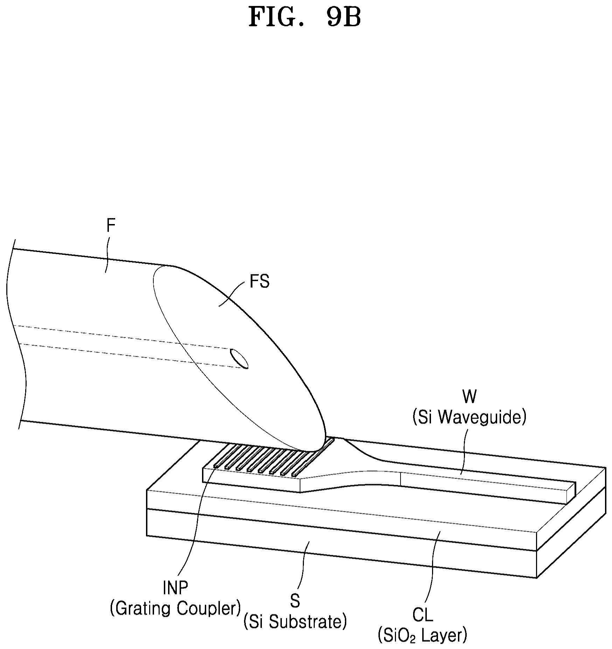

FIGS. 9A and 9B are views illustrating grating coupling between an optical fiber through which an optical signal is transmitted and the input port (a grating coupler), and illustrating vertical fiber coupling and horizontal fiber coupling in which different optical fibers are arranged in different orientations for each input port;

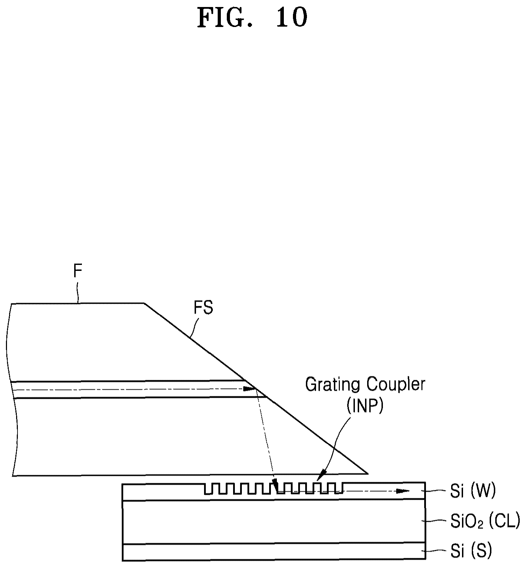

FIG. 10 is a view illustrating the grating coupling between the optical fiber and the input port in the horizontal fiber coupling illustrated in FIG. 9B;

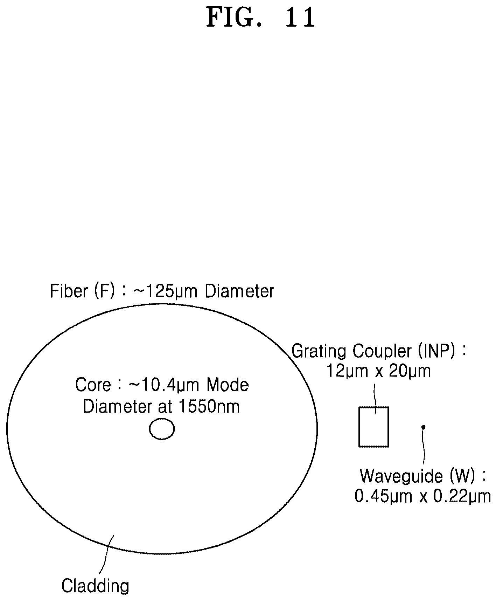

FIG. 11 is a diagram illustrating a configuration of the input port or a grating coupler of the input port, which implements coupling between a core of the optical fiber having a relatively wide cross-sectional area and the optical waveguide having a relatively narrow cross-sectional area;

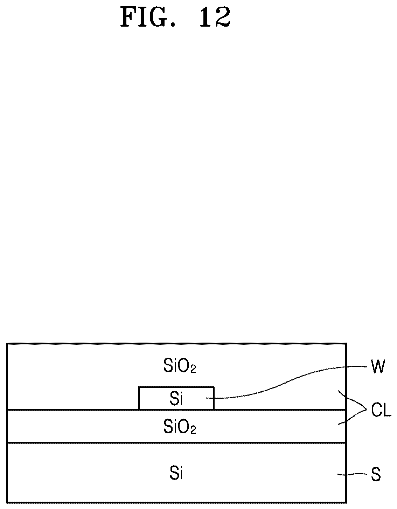

FIG. 12 illustrates a cross-sectional view illustrating a configuration of a base substrate (Si), a bottom oxide (SiO₂) on the base substrate (Si), an optical waveguide (Si) on the bottom oxide (SiO₂), and cladding (SiO₂) that covers the optical waveguide, which are included in a silicon-based silicon photonic circuit;

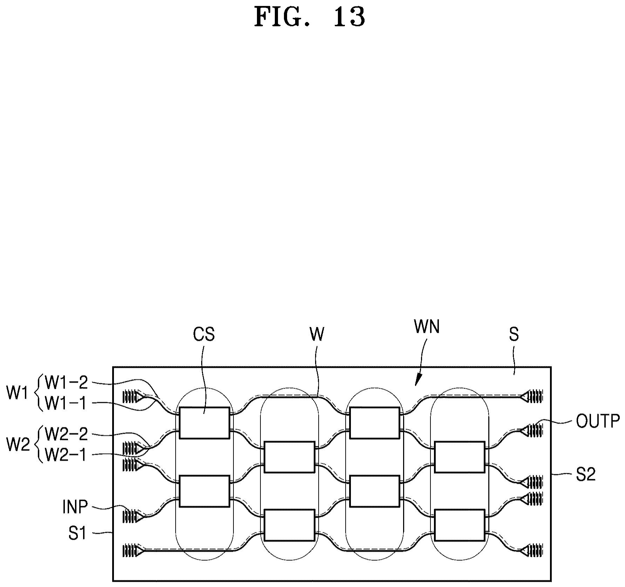

FIG. 13 is a diagram illustrating a stack structure in which a pair of 1^{st}-1 optical waveguide and 1^{st}-2 optical waveguide included in a first optical waveguide connected to the same display source and a pair of 2^{nd}-1 optical waveguide and 2^{nd}-2 optical waveguide included in a second optical waveguide connected to the same display sink are arranged vertically in the first type of the disclosure, and also illustrating multiple coupler switches configured together or interlocked to set three states (a bar state, a partial coupling state, and a cross state) for transmission of optical power crossing between the 1^{st}-1 optical waveguide and the 2^{nd}-1 optical waveguide and between the 1^{st}-2 optical waveguide and the 2^{nd}-2 optical waveguide;

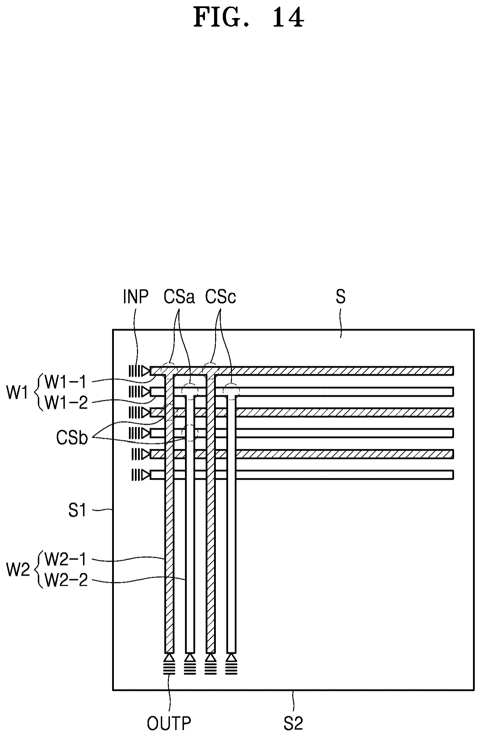

FIG. 14 is a diagram illustrating a structure in which a pair of the 1^{st}-1 optical waveguide and the 1^{st}-2 optical waveguide included in the first optical waveguide connected to the same display source and a pair of the 2^{nd}-1 optical waveguide and a 2^{nd}-2 optical waveguide included in the second optical waveguide connected to the same display sink are horizontally arranged in an interleaved shape, in the second type of the disclosure, and also illustrating coupler switches configured together or interlocked to set the same three states (a bar state, a partial coupling state, and a cross state) for transmission of optical power crossing between the 1^{st}-1 optical waveguide and the 2^{nd}-1 optical waveguide and between the 1^{st}-2 optical waveguide and the 2^{nd}-2 optical waveguide;

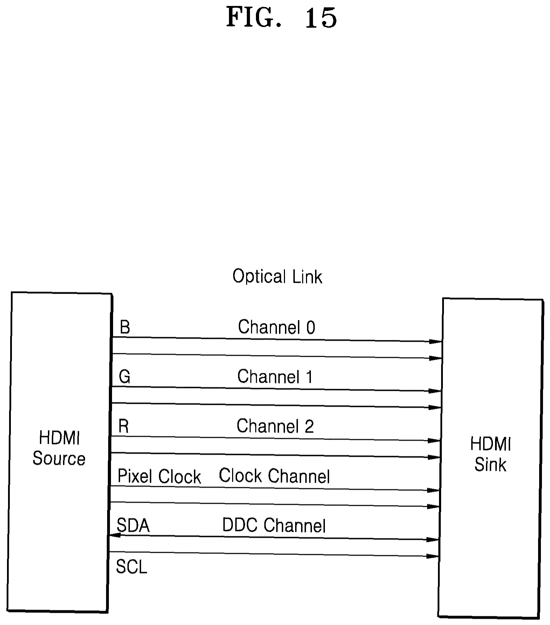

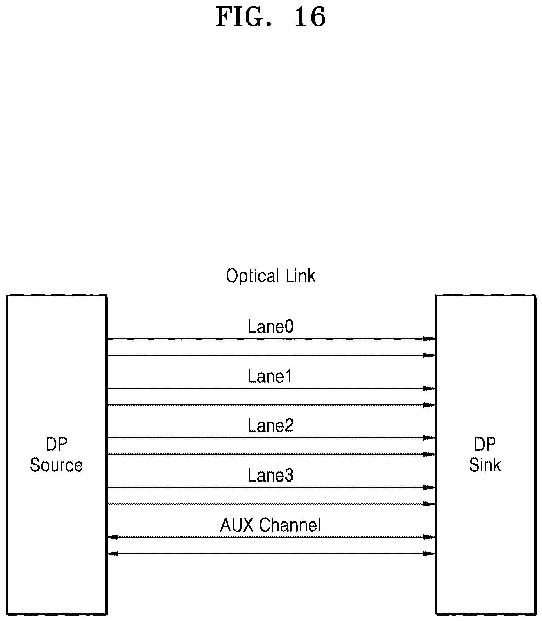

FIGS. 15 and 16 are diagrams illustrating respectively four primary channels and four primary channels with a high transmission rate and respectively two auxiliary channels and two auxiliary channels with a low transmission rate set between a display source and a display sink respectively in high definition multimedia interface (HDMI) transmission and display port transmission;

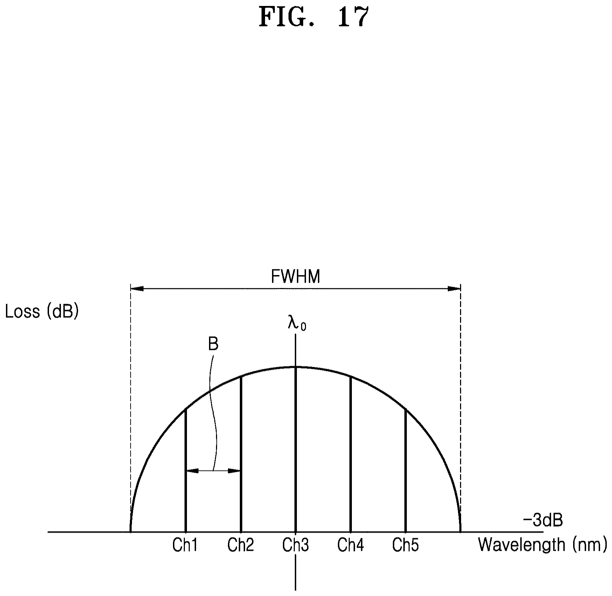

FIG. 17 is a diagram illustrating optical signals of different wavelengths that are assigned to five channels assigned to the optical waveguide according to an embodiment;

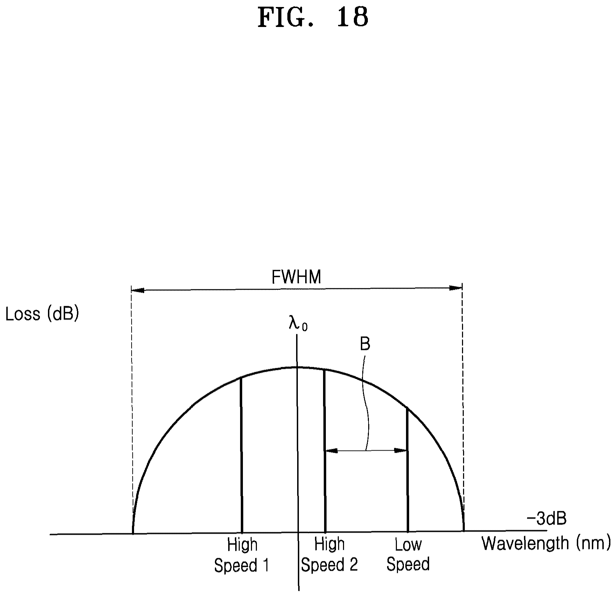

FIG. 18 is a diagram illustrating optical signals of different wavelengths that are assigned to three channels assigned to the optical waveguide, which includes two channels with a high transmission rate and one channel of low transmission rate, according to respective transmission rates in an embodiment;

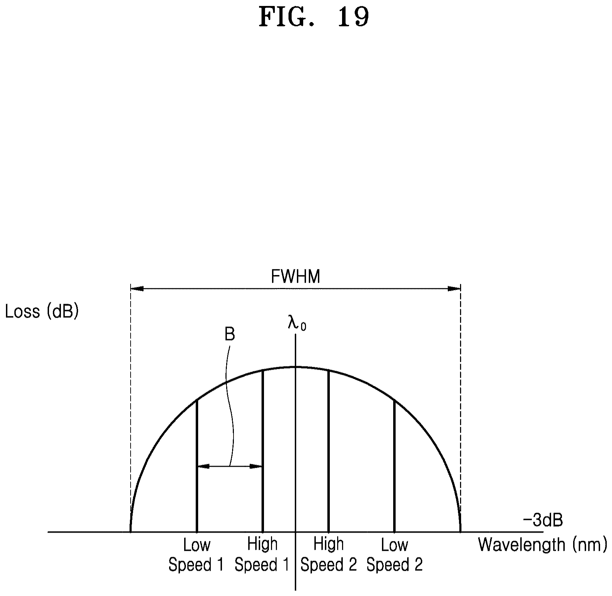

FIG. 19 is a diagram illustrating four channels including two channels with a high transmission rate and two channels with a low transmission rate, which are included in the optical waveguide and assigned to different wavelengths depending on transmission rates, according to an embodiment;

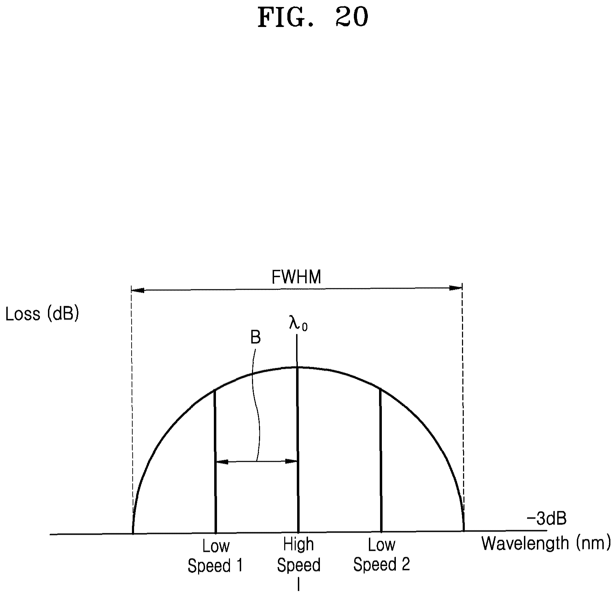

FIG. 20 is a diagram illustrating three channels including one channel with a high transmission rate and two channels with a low transmission rate, which are included in the optical waveguide and assigned to different wavelengths depending on transmission rates, according to an embodiment;

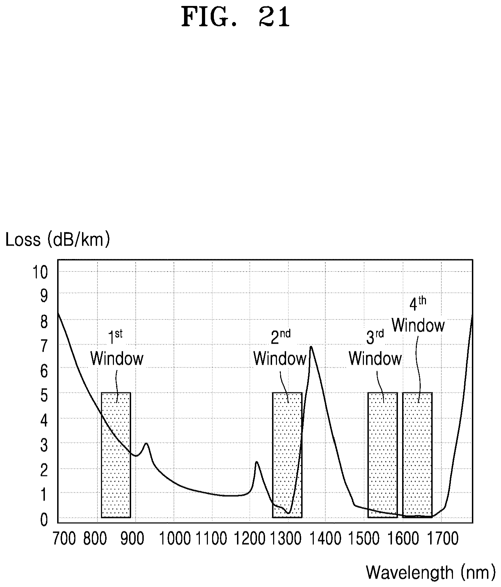

FIG. 21 illustrates a profile showing optical loss or attenuation depending on wavelength of an optical fiber (a silica-based optical fiber);

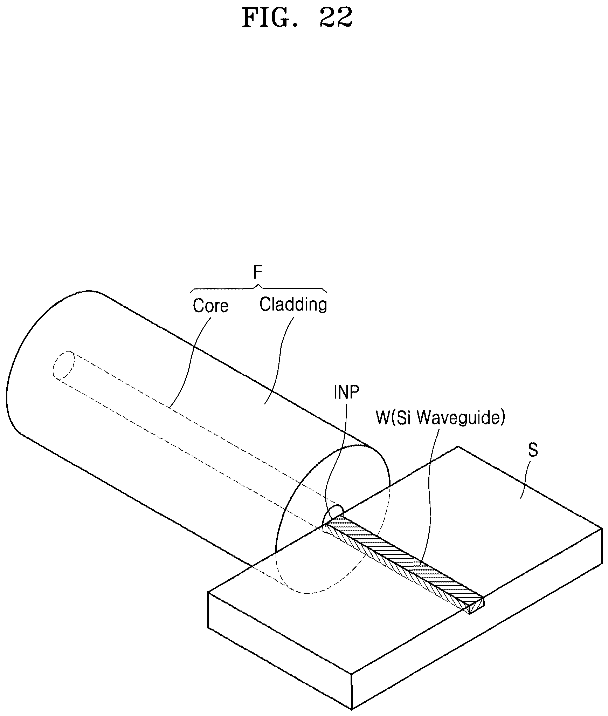

FIG. 22 is a view illustrating edge coupling between an optical fiber through which an optical signal is transmitted and an input port (edge coupler), which is different from the grating coupling or surface coupling illustrated in FIGS. 9A and 9B; and

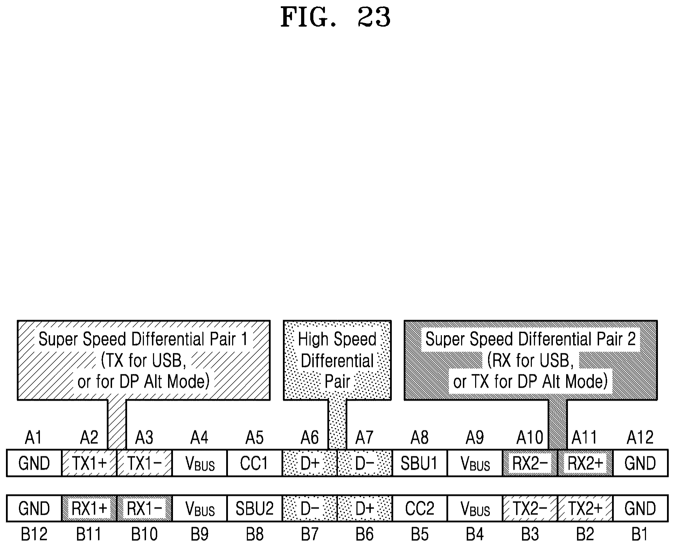

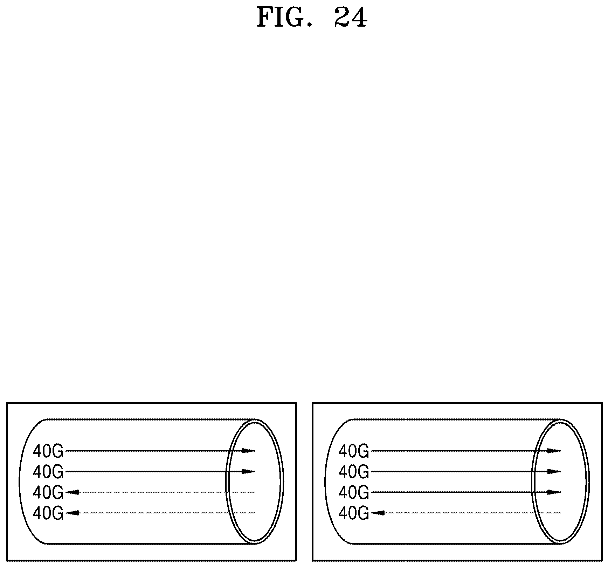

FIGS. 23 and 24 illustrate different communication protocols, respectively USB communication and Thunderbolt communication, to which the optical waveguide network of the disclosure may be applied according to embodiments.

### DETAILED DESCRIPTION

Hereinafter, a photonics circuit according to a preferred embodiment will be described with reference to the attached drawings.

FIG. 1 is a diagram illustrating a configuration including an optical waveguide network WN connecting multiple input ports INP to multiple output ports OUTP, and multiple coupler switches CS for controlling the transmission of different optical powers between adjacent optical waveguides W forming the optical waveguide network WN to implement mapping between the multiple input ports INP and the multiple output ports OUTP, according to a first type of the disclosure.

FIG. 2 is a diagram illustrating a configuration of the coupler switch CS including a phase shifter PS and a tunable coupler CP illustrated in FIG. 1.

FIGS. 3A to 3C are diagrams, each illustrating a ratio of optical powers Out1 and Out2 (see FIG. 2) crossing between a first optical waveguide W1 and a second optical waveguide W2 depending on the magnitude of a voltage set by the coupler switch CS or a phase difference ΔΦ or phase mismatch ΔΦ caused between the first and second optical waveguides W1 and W2 from the set voltage at different optical coupling efficiencies k, and are different diagrams shown to illustrate a ratio of the optical powers Out1 and Out2 (see FIG. 2) crossing between the first and second optical waveguides W1 and W2 based on the phase difference ΔΦ or phase mismatch ΔΦ caused between the first and second optical waveguides W1 and W2 from the magnitude of the voltage set by the coupler switch CS at different optical coupling efficiencies k.

FIG. 4 is a diagram illustrating a configuration including an optical waveguide network WN connecting multiple input ports INP to multiple output ports OUTP, and multiple coupler switches CS for controlling the transmission of different optical powers between adjacent optical waveguides W forming the optical waveguide network WN to implement mapping between the multiple input ports INP and the multiple output ports OUTP, according to a second type of the disclosure.

FIG. 5A and FIG. 5B are diagrams illustrating operations of the coupler switch CS that implements the transmission of different optical powers between adjacent optical waveguides W forming the optical waveguide network WN at different first and third positions P1 and P3 set in a movable coupler MOC of the coupler switch CS illustrated in FIG. 4, and specifically, FIG. 5A illustrates a through or bar state or an OFF state of the coupler switch CS in which no crossing of optical power occurs between adjacent first and second optical waveguides W1 and W2 at the first position P1 of the movable coupler MOC, and FIG. 5B illustrates a drop or cross state or an ON state of the coupler switch CS in which all optical powers cross between adjacent first and second optical waveguides W1 and W2 at the third position P3 of the movable coupler MOC.

FIG. 6 is a diagram illustrating an operation of the coupler switch CS that implements the transmission of different optical powers between adjacent optical waveguides W forming the optical waveguide network WN at different second and third positions P2 and P3 set in the movable coupler MOC of the coupler switch CS illustrated in FIG. 4, and illustrating a dividing or partial coupling state in which some of the optical powers remain and cross between adjacent first and second optical waveguides W1 and W2 at the second position P2 of the movable coupler MOC, and a drop or cross state in which all optical powers crossing between the adjacent first and second optical waveguides W1 and W2 at the third position P3 of the movable coupler MOC.

FIGS. 7A to 7C are diagrams illustrating operations of the coupler switch CS that implements the transmission of different optical powers between adjacent optical waveguides W forming the optical waveguide network WN at different first, second, and third positions P1, P2, and P3 set in the movable coupler MOC of the coupler switch CS illustrated in FIG. 4, and specifically, FIG. 7A illustrates a through or bar state in which no crossing of optical power occurs between adjacent first and second optical waveguides W1 and W2 at the first position P1 of the movable coupler MOC, FIG. 7B illustrates a dividing or partial coupling state in which some of the optical powers remain and cross between the adjacent first and second optical waveguides W1 and W2 at the second position P2, and FIG. 7C illustrates a drop or cross state in which all optical powers cross between the adjacent first and second optical waveguides W1 and W2 at the third position P3 of the movable coupler MOC.

FIGS. 8A to 8C are diagrams illustrating three different states set by the coupler switch CS, that is, three different states regarding the transmission of optical powers crossing between adjacent first and second optical waveguides W1 and W2 forming the optical waveguide network WN, and specifically, FIG. 8A illustrates a bar state in which there is no transmission of optical powers between the first and second optical waveguides W1 and W2, FIG. 8B illustrates a partial coupling state in which some of the optical powers remain and cross between the first and second optical waveguides W1 and W2, and FIG. 8C illustrates a cross state in which all optical powers cross between the first and second optical waveguides W1 and W2.

FIGS. 9A and 9B are views illustrating grating coupling between an optical fiber F through which an optical signal is transmitted and the input port INP (a grating coupler), and illustrating vertical fiber coupling and horizontal fiber coupling in which different optical fibers F are arranged in different orientations for each input port INP.

FIG. 10 is a view illustrating the grating coupling between the optical fiber F and the input port INP in the horizontal fiber coupling illustrated in FIG. 9B.

FIG. 11 is a diagram illustrating a configuration of the input port INP or a grating coupler of the input port INP, which implements coupling between a core of the optical fiber F having a relatively wide cross-sectional area and the optical waveguide W having a relatively narrow cross-sectional area.

FIG. 12 illustrates a cross-sectional view illustrating a configuration of a base substrate (Si) S, a bottom oxide (SiO₂) BOX on the base substrate (Si) S, an optical waveguide (Si) W on the bottom oxide (SiO₂), and cladding (SiO₂) CL that covers the optical waveguide W, which are included in a silicon-based silicon photonic circuit.

A photonic circuit according to an embodiment includes an optical fiber F for transmitting an optical signal; an input port INP forming a transmitting end side, an output port OUTP forming a receiving end side opposite to the transmitting end side, and an optical waveguide network WN connecting the input port INP to the output port OUTP, which are required to form coupling (grating coupling) with the optical fiber F; and a coupler switch CS for controlling transmission or optical coupling of optical powers crossing between adjacent first and second optical waveguides W1 and W2 forming the optical waveguide network WN and for implementing the transmission of different optical powers in a through or bar state in which there is substantially no crossing of optical powers between the first and second optical waveguides W1 and W2, a dividing (splitting) or partial coupling corresponding to partial remaining and partial crossing of optical power between the first and second optical waveguides W1 and W2, and a drop or cross state corresponding to full crossing of optical power between the first and second optical waveguides W1 and W2 by controlling coupling efficiency between the first and second optical waveguides W1 and W2 from an electrical input.

The first optical waveguide W1 includes a pair of 1^{st}-1 optical waveguide W1-1 and 1^{st}-2 optical waveguide W1-2, and the second optical waveguide W2 includes a pair of 2^{nd}-1 optical waveguide W2-1 and 2^{nd}-2 optical waveguide W2-2.

The flow of optical power crossing between the 1^{st}-1 optical waveguide W1-1 and 2^{nd}-1 optical waveguide W2-1 and the flow of optical power crossing between the 1^{st}-2 optical waveguide W1-2 and 2^{nd}-2 optical waveguide W2-2 are controlled together by the same coupler switch CS.

In an embodiment, the input port INP to which an optical signal is input from the optical fiber F, the output port OUTP from which an optical signal is output, the optical waveguide network WN connecting the input port INP to the output port OUTP according to a set mapping, and the coupler switch CS for implementing the set mapping between the input port INP and the output port OUTP by controlling the transmission or optical coupling efficiency of optical power between different optical waveguides W forming the optical waveguide network WN may be formed together on a base substrate S (for example, a silicon substrate) forming a common support base.

In an embodiment, the input port INP may include a grating coupler that forms grating coupling with the optical fiber F, and in various embodiments, depending on the type of grating coupling according to an arrangement between the input port INP and the optical fiber F, the optical fiber F may form vertical fiber coupling with a base substrate S on which the input port INP is formed (see FIG. 9A), or the optical fiber F may form horizontal fiber coupling with the base substrate S on which the input port INP is formed (see FIG. 9B). For example, in the vertical fiber coupling (see FIG. 9A), the optical fiber F may be arranged in a downwardly inclined posture toward the base substrate S, and in the horizontal fiber coupling (see FIG. 9B), the optical fiber F may be arranged in a posture parallel to the base substrate S, but an inclined surface FS may be formed at the end of the optical fiber F to induce downward total reflection toward the base substrate S. Referring to FIG. 11, in an embodiment, the input port INP or a grating coupler of the input port INP forming grating coupling with the optical fiber F may make optical coupling between the optical fiber F and the optical waveguide W having a core with a diameter of about 10.4 µm and a cross-section of 0.45 µm x 0.22 µm, and may implement coupling with a relatively little optical loss by focusing an optical signal being transmitted along the core of the optical fiber F having a relatively wide cross-section onto the optical waveguide W having a relatively narrow cross-section. For example, the optical fiber F is a single-mode optical fiber for transmitting an optical signal in a wavelength range of 1550 nm, and a diameter including the core and the cladding CL surrounding the core may be formed to be about 125 µm, and a diameter of the core where transmission of the optical signal is concentrated may be about 10.4 µm.

Referring to FIGS. 10 and 12, in an embodiment, a structure of the optical waveguide W forming the optical waveguide network WN may include a structure in which the bottom oxide (SiO₂) BOX is formed on a silicon substrate that is the base substrate S, and a core (for example, Si) of the optical waveguide W and the cladding (for example, SiO₂) CL surrounding the core are formed. The transmission of an optical signal may be concentrated onto the core (Si) of the optical waveguide W depending on difference in refractive index between the core (Si) of the optical waveguide W and the cladding (SiO₂) CL surrounding the core (Si). For example, in an embodiment, the input port INP or a grating coupler of the input port INP that provides coupling of an optical signal between the optical fiber F and the optical waveguide W may have a cross-section of about 12 µm x about 20 µm and may be formed to be wider than a cross-section (having a diameter of 10.4 µm) of the core of the optical fiber F (see FIG. 11).

Referring to FIGS. 1 and 4, in an embodiment, the input port INP and the output port OUTP may be arranged in multiple numbers along the first edge S1 and the second edge S2 of the base substrate S (for example, a silicon substrate), and for example, each optical fiber F may form grating coupling one-to-one corresponding to each input port INP so as to correspond to an array of input ports INP arranged in multiple numbers along the first edge S1 side of the base substrate S. For example, an optical signal transmitted through each optical fiber F may be transmitted through an input port INP that forms grating coupling with each optical fiber F and each optical waveguide W connected to each input port INP.

Referring to FIGS. 1 and 4, in an embodiment, the optical waveguide network WN may establish connections between N input ports INP and N output ports OUTP according to the mapping between the N input ports INP and the N output ports OUTP. To this end, the photonic circuit according to an embodiment may include the multiple coupler switches CS for controlling optical coupling efficiency between adjacent optical waveguides W forming the optical waveguide network WN to implement the flow or transmission of different optical powers between the adjacent optical waveguides W.

In an embodiment, the multiple coupler switches CS may input a plurality of electrical control signals (a first coupler control bit b1 and a second coupler control bit b2 described below) and control the flow or transmission of different optical powers between the first and second optical waveguides W1 and W2 through which flows of crossing optical powers are controlled. In an embodiment, the flow or transmission of different optical powers between the adjacent first and second optical waveguides W1 and W2 forming the optical waveguide network WN may include three different states below.
i) A through-state (see FIG. 7A) or a bar state (see FIG. 8A) in which there is substantially no transmission of optical power crossing between the first and second optical waveguides W1 and W2.
ii) A dividing (splitting) state (see FIG. 7B) or a partial coupling state (see FIG. 8B), corresponding to partial remaining and partial crossing of optical power between the first and second optical waveguides W1 and W2.
iii) A drop state (see FIG. 7C) or a cross state (see FIG. 8C) corresponding to full crossing of optical power between the first and second optical waveguides W1 and W2.

In an embodiment, the transmission or flow of optical power crossing between different optical waveguides W may be defined as the three states of i), ii), and iii) described above.

The through-state (see FIG. 7A) or the bar state (see FIG. 8A) in which there is substantially no transmission of optical power crossing between the first and second optical waveguides W1 and W2 as described in i) above may indicate a state in which optical powers are not substantially transmitted between the first and second optical waveguides W1 and W2 adjacent to each other and optical coupling efficiency is the lowest (for example, a state in which the optical coupling efficiency is substantially close to zero), or a state in which optical coupling is substantially not performed between the first and second optical waveguides W1 and W2, for example, a state in which an optical signal transmitted to the first optical waveguide W1 is not transmitted to the second optical waveguide W2 or is transmitted with negligible optical power even when the optical signal is transmitted to the second optical waveguide W2, and in which the optical signal is continuously transmitted to the first optical waveguide W1 as it is.

The dividing (splitting) state (see FIG. 7B) or the partial coupling state (see FIG. 8B) corresponding to the partial remaining and partial crossing of the optical powers between the first and second optical waveguides W1 and W2 as described in ii) above is a state in which optical powers are partially transmitted between the first and second optical waveguides W1 and W2 adjacent to each other and optical coupling efficiency is intermediate, for example, a state in which a part of the optical signal transmitted to the first optical waveguide W1 is transmitted to the second optical waveguide W2 between the first optical waveguide W1 and the second optical waveguide W2 adjacent to each other, and the other of the optical signal transmitted to the first optical waveguide W1 is continuously transmitted to the first optical waveguide W1 as it is. In addition, the drop state (see FIG. 7C) or the cross state (see FIG. 8C) corresponding to full crossing of optical power between the first and second optical waveguides W1 and W2 as described in iii) above may indicate a state in which optical coupling efficiency is the greatest between the first and second optical waveguides W1 and W2 adjacent to each other (for example, a state in which the optical coupling efficiency is close to 100 %), that is, a state in which an optical signal input to the first optical waveguide W1 on an input side is output through the second optical waveguide W2 on an output side and the optical signal transmitted through the first optical waveguide W1 is transmitted to the second optical waveguide W2 with all optical powers. In an embodiment, the transmission or optical coupling efficiency of optical power crossing between the first and second optical waveguides W1 and W2 adjacent to each other may be understood in terms of a transmission length or coupling length related to the optical coupling efficiency. For example, the optical signal or all optical powers of the first optical waveguide W1 may be transmitted to the second optical waveguide W2 through the transmission length or coupling length inversely proportional to the optical coupling efficiency between the first and second optical waveguides W1 and W2 adjacent to each other. As described below, the coupler switch CS, which sets a voltage to induce a phase difference or phase mismatch between the first and second optical waveguides W1 and W2 by applying an external electric field, may be provided on at least one of the first and second optical waveguides W1 and W2. For example, in a state where the voltage for inducing the phase difference or phase mismatch between the first and second optical waveguides W1 and W2 is not set by the coupler switch CS, for example, a state where zero voltage is set by the coupler switch CS, all optical powers may be transmitted between the first and second optical waveguides W1 and W2 through a transmission length or coupling length related to optical coupling efficiency between the first and second optical waveguides W1 and W2, and the first and second optical waveguides W1 and W2 may be transmitted from the coupler switch CS, and in a state where a voltage for inducing a phase difference or phase mismatch between the first and second optical waveguides W1 and W2 is set by the coupler switch CS, the all optical powers may not be transmitted between the first and second optical waveguides W1 and W2, and the optical power (for example, a transmission ratio of the optical powers crossing between the first and second optical waveguides W1, W2) crossing between the first and second optical waveguides W1 and W2 may be represented by a function of the phase difference or phase mismatch between the first and second optical waveguides W1 and W2.

FIGS. 3a to 3C are diagrams illustrating ratios of optical powers Out1 and Out2 (see FIG. 2) crossing between the first and second optical waveguides W1 and W2 depending on a magnitude of the voltage set by the coupler switch CS or the phase difference ΔΦ or phase mismatch ΔΦ between the first and second optical waveguides W1 and W2 which is caused by the set voltage, and are different drawings illustrating a ratio of the optical powers crossing between the first and second optical waveguides W1 and W2 depending on the magnitude of a voltage set by the coupler switch CS or the phase difference ΔΦ or phase mismatch ΔΦ between the first and second optical waveguides W1 and W2 which is caused by the set voltage, respectively at different optical coupling efficiencies k. Referring to FIGS. 3A to 3C, it may be seen that, as the voltage set by the coupler switch increases, the phase difference ΔΦ or phase mismatch ΔΦ between the first and second optical waveguides W1 and W2 increases, and a ratio of the optical powers Out1 and Out2 (see FIG. 2) of the first and second optical waveguides W1 and W2 changes, and also, it may be seen that, as the voltage set by the coupler switch CS increases and the phase difference ΔΦ or phase mismatch ΔΦ between the first and second optical waveguides W1 and W2 which is caused by the set voltage increases, a ratio (a relative ratio of the optical powers Out1 and Out2) (see FIG. 2) of the optical powers crossing between the first and second optical waveguides W1 and W2 decreases.

Referring to FIGS. 1 and 4, the photonic circuit of the disclosure may have first and second types of embodiments that are different from each other, depending on configurations including the optical waveguide network WN, which connects the multiple input ports INP to the multiple output ports OUTP, and the multiple coupler switches CS for implementing the transmission of different optical powers (for example, a ratio of optical powers transmitted between the first and second optical waveguides W1 and W2 adjacent to each other) between the adjacent first and second optical waveguides W1 and W2 forming the optical waveguide network WN to implement the mapping set between the multiple input ports INP and the multiple output ports OUTP.

Referring to FIGS. 1 and 2, in the first type of embodiment, the multiple input ports INP and the multiple output ports OUTP may be formed respectively on first and second sides S1 and S2 facing each other of the base substrate S on which the optical waveguide network WN is formed, and the multiple input ports INP and the multiple output ports OUTP may be arranged respectively along the first and second sides S1 and S2 facing each other of the base substrate S. In addition, the first and second optical waveguides W1 and W2 that change the transmission of optical powers crossing each other through the coupler switch CS to implement mapping between the input port INP and the output port OUTP while forming the optical waveguide network WN may include the tunable coupler CP extending from the input port INP to the output port OUTP and extending parallel at a relatively close position, and the phase shifter PS extending parallel at a relatively far position. For example, in an embodiment, the multiple optical waveguides W forming the optical waveguide network WN may extend substantially parallel from the multiple input ports INP formed on the first side S1 of the base substrate S toward the multiple output ports OUTP formed on the second side S2 facing the first side S1, and may include the tunable couplers CP extending parallel at a relatively close position between the optical waveguides W adjacent to each other and the phase shifters PS extending parallel at a relatively far position between the optical waveguides W adjacent to each other. However, in various embodiments, the tunable coupler CP and the phase shifter PS between the adjacent optical waveguides W forming the optical waveguide network WN may not be distinguished from each other, and for example, the tunable coupler CP at a relatively close position may not be distinguished from the phase shifter PS at a relatively far position, and for example, the tunable coupler CP where the optical powers cross according to a leaked electric field of an evanescent field between the adjacent optical waveguides W forming the optical waveguide network WN and the phase shifter PS for inducing a phase difference or phase mismatch between the adjacent optical waveguides W may also be formed at the substantially same section. In the disclosure, although the adjacent optical waveguides (for example, the first and second optical waveguides W1 and W2) forming the optical waveguide network WN are described as including the tunable coupler CP in which optical powers cross according to a leaked electric field of an evanescent field at a relatively close position, and the phase shifter PS for inducing a phase difference or phase mismatch between the optical waveguides (first and second optical waveguides W1, W2) at a relatively far position for the sake of convenience of understanding, the technical configuration of the disclosure may not be limited to the embodiments described above.

In an embodiment, the coupler switch CS, which sets a voltage for inducing a phase difference or phase mismatch between the first and second optical waveguides W1 and W2 by applying an external electric field, may be provided on at least one of the first and second optical waveguides W1 and W2 adjacent to each other. For example, in an embodiment, the coupler switch CS may apply an external electric field onto one of the first and second optical waveguides W1 and W2, or may also apply external electric fields of opposite polarities to both sides of the first and second optical waveguides W1 and W2. In an embodiment, an optical speed of an optical signal transmitting through the optical waveguide W may change due to the influence of an external electric field, and, for example, a phase difference or phase mismatch may occur between the first and second optical waveguides W1 and W2 adjacent to each other depending on a change in wavelength of the optical signal or a change in refractive index of the optical waveguide W.

As illustrated in FIGS. 3A to 3C, the transmission (a transmission ratio between optical powers crossing between the first and second optical waveguides W1 and W2) of optical power crossing between the first and second optical waveguides W1 and W2 may be changed depending on the phase difference ΔΦ or phase mismatch ΔΦ between the first and second optical waveguides W1 and W2. For example, depending on voltages set by the multiple coupler switches CS to induce the phase difference ΔΦ or phase mismatch ΔΦ between the first and second optical waveguides W1 and W2, i) the through-state (see FIG. 7A) or the bar state (see FIG. 8A) in which there is substantially no optical power crossing between the first and second optical waveguides W1 and W2, ii) the dividing (splitting) state (see FIG. 7B) or the partial coupling state (see FIG. 8B) of partial remaining and partial crossing between the first and second optical waveguides W1 and W2, and iii) the drop state (see FIG. 7C) or the cross state (see FIG. 8C) corresponding to full crossing of optical power between the first and second optical waveguides W1 and W2 may implement the transmission of different optical powers. For example, in an embodiment, the coupler switch CS that receives electrical control signals to implement the transmission of different optical powers between the first and second optical waveguides W1 and W2 adjacent to each other may receive a control signal including the first and second coupler control bits b1 and b2 (see FIG. 1) to set three different states or three different levels of a voltage for setting the three different states (a bar state, a partial coupling state, and a cross state) (see FIGS. 8A to 8C). For example, in an embodiment, a control unit (not illustrated) that outputs control signals including the first and second coupler control bits b1 and b2 to the multiple coupler switch CS may be provided to implement the mapping set between the multiple input ports INP and the multiple output ports OUTP. The control unit (not illustrated) may generate the control signals and output the control signals to the multiple coupler switches CS that implement a mapping for establishing connections between the multiple input ports INP and the multiple output ports OUTP according to a user's setting or start of automatic setting for detecting a connection state.

In an embodiment, three different states (the bar state, the partial coupling state, and the cross state) (see FIGS. 8A to 8C) regarding the transmission of optical power crossing between the first and second optical waveguides W1 and W2 may be set depending on voltages set by the multiple coupler switches CS.
i) As a zero voltage is set by the coupler switch CS, the transmission of optical power in the drop state or cross state corresponding to full crossing of optical power may be implemented between the first and second optical waveguides W1 and W2 from the input port INP to the output port OUTP (no phase difference or phase mismatch between the first and second optical waveguides W1 and W2).
ii) As the greatest voltage is set by the coupler switch CS, the transmission of optical power in the through-state or bar state with substantially no crossing of optical power may be implemented between the first and second optical waveguides W1 and W2 from the input port INP to the output port OUTP (a phase difference or phase mismatch capable of blocking the full crossing of optical power between the first and second optical waveguides W1 and W2).
iii) As a voltage between the zero voltage and the greatest voltage is set by the coupler switch CS, the transmission of optical power in the dividing (splitting) state or partial coupling state corresponding to partial remaining and partial crossing of optical power may be implemented between the first and second optical waveguides W1 and W2 from the input port INP to the output port OUTP (a phase difference or phase mismatch capable of blocking a part of optical power crossing between the first and second optical waveguides W1 and W2).

For example, in an embodiment, according to the first and second coupler control bits b1 and b2 received by the coupler switch CS, or according to the first and second coupler control bits b1 and b2 output from the control unit to the coupler switch CS,
i) when each of the first and second coupler control bits b1 and b2 is bit 0, transmission of optical power in a drop state or cross state corresponding to full crossing of optical power may be implemented between the first and second optical waveguides W1 and W2 from the input port INP to the output port OUTP while achieving a phase matching (there is no phase difference or phase mismatch between the first and second optical waveguides W1 and W2),
ii) when the first coupler control bit b1 is bit 1 and the second coupler control bit b2 is bit 0, transmission of optical power in a dividing (splitting) state or partial coupling state corresponding to a partial remaining and partial crossing of the optical power may be implemented between the first and second optical waveguides W1 and W2 from the input port INP to the output port OUTP while achieving a phase mismatch for blocking partial transmission of the optical power (a phase difference or phase mismatch for blocking a part of the optical power crossing between the first and second optical waveguides W1 and W2), and
iii) when each of the first and second coupler control bits b1 and b2 is bit 1, the transmission of optical power in a through-state or bar state with substantially no crossing of the optical powers may be implemented between the first and second optical waveguides W1 and W2 while achieving a phase mismatch for blocking the full transmission of optical power between the first and second optical waveguides W1 and W2 from the input port INP to the output port OUTP (a phase difference or phase mismatch capable of blocking the entire optical power crossing between the first and second optical waveguides W1 and W2).

Referring to FIGS. 4 to 7, in the second type of embodiment, the multiple input ports INP and the multiple output ports OUTP may be provided on the first and second sides S1 and S2 that intersect each other to be in contact with each other at one edge of the base substrate S on which the optical waveguide network WN is provided, and the multiple input ports INP and the multiple output ports OUTP may be arranged respectively along the first and second sides S1 and S2 that intersect each other of the base substrate S. In addition, in relation to the first and second optical waveguides W1 and W2 in which the transmission of optical powers cross each other is changed by the coupler switch CS to implement mapping between the multiple input ports INP and the multiple output ports OUTP while forming the optical waveguide network WN, in order to control the transmission or optical coupling efficiency of optical power crossing between the first optical waveguide W1 connected to the input port INP and the second optical waveguide W2 connected to the output port OUTP, the coupler switch CS including the movable coupler MOC that performs forward and reverse motions along an approaching direction toward an intersection point between the first optical waveguide W1 and the second optical waveguide W2 or a retreating direction away from the intersection point between the first optical waveguide W1 and the second optical waveguide W2 may be provided adjacent to the intersection point between the first optical waveguide W1 connected to the input port INP and the second optical waveguide W2 connected to the output port OUTP.

In an embodiment, depending on distances from the intersection point between the first optical waveguide W1 connected to the input port INP and the second optical waveguide W2 connected to the output port OUTP, the movable coupler MOC may set the first position P1 that is farthest from the intersection point between the first and second optical waveguides W1 and W2, the third position P3 that is closest from the intersection point between the first and second optical waveguides W1 and W2, and the second position P2 that is between the first position P1 and the third positions P3, and may set three different states regarding the transmission of optical power crossing between the first and second optical waveguides W1 and W2 at the first to third positions P1, P2, and P3 at different distances from the intersection point between the first optical waveguide W1 connected to the input port INP and the second optical waveguide W2 connected to the output port OUTP.

More specifically, the movable coupler MOC implements i) transmission of optical powers in the through-state or bar state with substantially no crossing of optical power between the first optical waveguide W1 connected to the input port INP and the second optical waveguide W2 connected to the output port OUTP at the first position P1 farthest from the intersection point between the first and second optical waveguides W1 and W2, ii) transmission of optical powers in the drop state or cross state corresponding to full crossing of optical power between the first optical waveguide W1 connected to the input port INP and the second optical waveguide W2 connected to the output port OUTP at the third position P3 closest to the intersection point between the first and second optical waveguides W1 and W2, and iii) transmission of optical powers in the dividing (splitting) state or partial coupling state corresponding to partial remaining and partial crossing of optical power at the second position P2 between the first position P1 farthest from the intersection point between the first and second optical waveguides W1 and W2 and the third position P3 closest to the intersection point.

In an embodiment, the movable coupler MOC may set three different levels of positions from the first position P1 farthest from an intersection point between the first and second optical waveguides W1 and W2 to the third position P3 closest from the intersection point, depending on distances from the intersection point between the first and second optical waveguides W1 and W2. The coupler switch CS may receive a control signal including first and second coupler control bits b1 and b2 for applying three different levels of control signals or control voltages. For example, in an embodiment, a control unit (not illustrated) that outputs a control signal including the first and second coupler control bits b1 and b2 to the coupler switch CS may be provided to implement the mapping set between the multiple input ports INP and the multiple output ports OUTP. The control unit (not illustrated) may generate a control signal and output the control signal to each coupler switch CS that implements the mapping for establishing connections between the multiple input ports INP and the multiple output ports OUTP according to a user's setting or start of automatic setting for detecting a connection state.

In an embodiment, three different states (a bar state, a partial coupling state, and a cross state) regarding the transmission of optical power crossing between the first and second optical waveguides W1 and W2 may be set according to the first to third positions P1, P2, and P3 set by the coupler switch CS, and for example, according to a control signal including the first and second coupler control bits b1 and b2 received by the coupler switch CS, or according to a control signal including the first and second coupler control bits b1 and b2 output from a control unit (not illustrated) to the coupler switch CS, the first to third positions P1, P2, and P3 of the movable coupler MOC set by the coupler switch CS may be set as follows.
i) In bit 0 of the first and second coupler control bits b1 and b2, the movable coupler MOC may be set to the first position P1 that is farthest from an intersection point between the first and second optical waveguides W1 and W2.
ii) In bit 1 of the first coupler control bit b1 and bit 0 of the second coupler control bit b2, the movable coupler MOC may be set to the second position P2 that is an intermediate position from the intersection point between the first and second optical waveguides W1 and W2.
iii) In bit 1 of the first and second coupler control bits b1 and b2, the movable coupler MOC may be set to the third position P3 that is closest to the intersection point between the first and second optical waveguides W1 and W2.

In an embodiment, the movable coupler MOC may include a first coupling rib M1 extending parallel to the first optical waveguide W1 to form evanescent coupling with the first optical waveguide W1 connected to the input port INP, and a second coupling rib M2 extending parallel to the second optical waveguide W2 to form evanescent coupling with the second optical waveguide W2. For example, as the movable coupler MOC approaches the intersection point between the first optical waveguide W1 connected to the input port INP and the second optical waveguide W2 connected to the output port OUTP (for example, as the movable coupler MOC approaches from the first position P1 in a bar state to the second position P2 in a partial coupling state or the third position P3 in a cross state), evanescent coupling may be induced between the first optical waveguide W1 and the first coupling rib M1 extending parallel to each other, and more specifically, when an evanescent electric field, which leaks from a surface of the first optical waveguide W1 toward the first coupling rib M1 of the movable coupler MOC with an amplitude or intensity that decreases exponentially with distance, intersects the first coupling rib M1 of the movable coupler MOC, optical power may be transmitted from the first optical waveguide W1 to the first coupling rib M1. Similarly, as the movable coupler MOC approaches the intersection point between the first optical waveguide W1 connected to the input port INP and the second optical waveguide W2 connected to the output port OUTP (for example, as the movable coupler MOC approaches from the first position P1 in the bar state to the second position P2 in the partial coupling state or the third position P3 in the cross state), evanescent coupling may be induced between the second optical waveguide W2 and the second coupling rib M2 extending parallel to each other, and more specifically, when an evanescent electric field, which leaks from a surface of the second coupling rib M2 toward the second optical waveguide W2 with an amplitude or intensity that decreases exponentially with distance, intersects the second optical waveguide W2, optical power may be transmitted from the second coupling rib M2 to the second optical waveguide W2. For example, in an embodiment, when the movable coupler MOC forms evanescent coupling with the first optical waveguide W1 connected to the input port INP to which an optical signal is input, a part or all of the optical power of the optical signal transmitted through the first optical waveguide W1 may be transferred from the first optical waveguide W1 to the first coupling rib M1 of the movable coupler MOC. Also, when the movable coupler MOC forms evanescent coupling with the second optical waveguide W2 connected to the output port OUTP from which an optical signal is output, a part or all of the optical power of the optical signal transmitted through the second coupling rib M2 may be transferred from the second coupling rib M2 to the second optical waveguide W2 connected to the output port OUTP. In this way, in an embodiment, the transfer of optical power between the first and second optical waveguides W1 and W2 may include the transmission of optical power from the first optical waveguide W1 connected to the input port INP, to which an optical signal is input, to the first coupling rib M1 of the movable coupler MOC through evanescent coupling, and the transmission of optical power from the second coupling rib M2 of the movable coupler MOC to the second optical waveguide W2 through the evanescent coupling.

In an embodiment, an electric field (evanescent field) leaking between the first optical waveguide W1 and the movable coupler MOC between which form evanescent coupling may have an amplitude or intensity that decreases, for example, exponentially decreases from the first optical waveguide W1 toward the movable coupler MOC (for example, the first coupling rib M1 of the movable coupler MOC), and an electric field (evanescent field) leaking between the second optical waveguide W2 and the movable coupler MOC may have an amplitude or intensity that decreases, for example, exponentially decreases from the movable coupler MOC toward the second optical waveguide W2. In this way, in an embodiment, in implementing the transmission of optical power in three different states (a bar state, a partial coupling state, and a cross state) between the first optical waveguide W1 connected to the input port INP and the second optical waveguide W2 connected to the output port OUTP, by setting a position of the movable coupler MOC to one of the first to third positions P1, P2, and P3 according to a distance from the intersection point between the first and second optical waveguides W1 and W2 through the forward and backward movement of the movable coupler MOC forming the evanescent coupling between the first optical waveguide W1 connected to the input port INP and the second optical waveguide W2 connected to the output port OUTP, the intensity of an electric field leaking between the movable coupler MOC and the first and second optical waveguides W1 and W2 decreases, for example, exponentially decreases depending on a distance between the movable coupler MOC and the first and second optical waveguides W1 and W2, and the transmission (the transmission efficiency of the optical power between the first and second optical waveguides W1, W2 and the movable coupler MOC) of optical power crossing between the movable coupler MOC and the first and second optical waveguides W1 and W2 may be differentially set depending on the intensity of the leaked electric field.

FIGS. 15 and 16 are diagrams illustrating respectively four primary channels Channel 0, Channel 1, Channel 2, and Clock Channel and four primary channels Lane 0, Lane 1, Lane 2, and Lane 3 of high transmission rate and respectively two auxiliary channels SDA and SCL and two auxiliary channels AUX Channel of low transmission rate set between a display source and a display sink respectively in high definition multimedia interface (HDMI) transmission and display port transmission.

In an embodiment including the first type of embodiment (see FIG. 1) and the second type of embodiment (see FIG. 4), through the optical waveguide network WN connecting the multiple input ports INP to the multiple output ports OUTP, and the coupler switch CS for implementing the transmission of optical power in three different states (a bar state, a partial coupling sate, and a cross state) between the adjacent first and second optical waveguides W1 and W2 forming the optical waveguide network WN to implement the mapping between the multiple input ports INP and the multiple output ports OUTP, a video signal and an auxiliary signal transmitted through the multiple input ports INP may be output to a display source connected to the multiple output ports OUTP, and a sequence of video frames of the video signal may be reproduced by the display source. For example, in an embodiment, at least one display source may be connected to the input port INP, and at least one display sinks may be connected to the output port OUTP. As used herein, connecting at least one display source to the input port INP may mean that the at least one display source is connected to a transmitter forming an opposite end of the optical fiber F connected to the input pot INP, for example, forming grating coupling with the input port INP, and for example, connecting at least one display source to the input port INP may not necessarily mean that the display source is connected directly to the input port INP. Similarly, connecting at least one display sink to the output port OUTP may not necessarily mean that the at least one display sink is connected directly to the output port OUTP, and for example, connecting at least one display sink to the output port OUTP may comprehensively mean that the at least one display sink is connected to the output port OUTP through a transmission line, such as the optical fiber F or a conductive line connected to the output port OUTP. Also, in the disclosure, connecting a display source to the input port INP or connecting a display sink to the output port OUTP may comprehensively mean that at least one display source is connected to at least one input port INP, or at least one display sink is connected to at least one output port OUTP.

In an embodiment, a display source that generates and transmits a video signal may be connected one-to-one or one-to-many to a display sink that receives the video signal from the display source and plays a sequence of video frames of the received video signal, and for example, even when the display source is connected one-to-one to the display sink, multiple communication channels may be formed between the display source and the display sink, and multiple communication channels, each carrying different data, may be formed therebetween. For example, in an embodiment, a communication channel between a display source and a display sink may include a primary channel (or main link) through which a video signal is transmitted at a relatively high transmission rate, and an auxiliary channel through which an auxiliary signal for setting up the primary channel (or main link) between the display source and the display sink is transmitted at a relatively low transmission rate. For example, referring to FIG. 15, in HDMI transmission, the primary channel may include a total of four primary channels including three channels Channel 0, Channel 1, and Channel 2 for transmitting video data such as R, G, and B or Y, Cb, and Cr, and one primary channel Clock Channel for a pixel clock, and the auxiliary channel may include a total of two auxiliary channels including a clock line SCL and a data line SDA for synchronization between the display source and the display sink. For example, referring to FIG. 16, in the transmission of a display port, the primary channel may include four primary channels Lane 0, Lane 1, Lane 2, and Lane 3 for transmitting video signals, and two auxiliary channels AUX Channel including an auxiliary channel from a display source to a display sink and an auxiliary channel from the display sink to the display source to support bidirectional communication. In this way, in an embodiment, a total of six communication channels (four primary channels for transmitting video signals and two auxiliary channels for transmitting auxiliary signals) for different data communications may be provided between the display source and the display sink, and the six different communication channels may correspond to wavelength division multiplexing, and signals may be transmitted through a smaller number of optical waveguides W, for example, two optical waveguides W, rather than six optical waveguides W. That is, in an embodiment, respective optical waveguides W forming the optical waveguide network WN connecting the multiple input ports INP to the multiple output ports OUTP may provide multiple communication channels.

FIG. 17 is a diagram illustrating optical signals of different wavelengths that are assigned to five channels assigned to the optical waveguide W according to an embodiment.

FIG. 18 is a diagram illustrating optical signals of different wavelengths that are assigned to three channels assigned to the optical waveguide W, which includes two channels with a high transmission rate and one channel of low transmission rate, according to respective transmission rates in an embodiment.

In an embodiment, the optical waveguide W forming the optical waveguide network WN connecting the input port INP to the output port OUTP may have an optical gain profile or an optical loss profile having a full-width at half maximum (FWHM) that is attenuated by -3 dB to half the peak value of a central wavelength band λ0 toward both sides from a central wavelength band λ0 forming a single peak according to a specific structure and scale forming the optical waveguide W, and the optical waveguide W may transmit different optical signals of wavelengths separated from each other with a wavelength separation bandwidth B interposed therebetween, considering a resolution for separation between different wavelengths forming different communication channels, so as to prevent cross-talk between different communication channels within a wavelength range forming the FWHM. In the disclosure, the central wavelength band λ0 may refer to a wavelength forming a single peak in the profile of an optical gain or optical loss according to the specific structure and scale of the optical waveguide W. In an embodiment, by allocating a wavelength of an optical signal transmitted to the optical waveguide W within a wavelength range forming a FWHM that is attenuated by -3 dB to half the peak value of the central wavelength band λ0 toward both sides from the central wavelength band λ0 forming a single peak, the attenuation of an optical signal may be prevented (an amplitude or intensity of the optical signal is prevented from being attenuated to less than half the peak value of the central wavelength band λ0).

In an embodiment, different communication channels of different wavelengths transmitted through the same optical waveguide W through wavelength division multiplexing may be separated from other communication channels by applying a wavelength selection filter, and in this case, a resolution for separation between different wavelengths forming the different communication channels to prevent cross-talk between the different communication channels may correspond to a resolution of the wavelength selection filter for separating optical signals of different wavelengths transmitted from the same optical waveguide W, or to a value obtained by adding a tolerance to the resolution of the wavelength selection filter. For example, in an embodiment, a wavelength selection filter for separating optical signals of different wavelengths forming different communication channels may have a resolution of 5 nm. In an embodiment, different communication channels transmitted through the same optical waveguide W may be formed by optical signals of different wavelengths separated from each other with the wavelength separation bandwidth B of 10 nm obtained by adding a tolerance to a resolution (for example, 5 nm) of the wavelength selection filter, within a wavelength range of FWHM of an optical gain or optical loss of the optical waveguide W. For example, in an embodiment, different communication channels transmitted through the same optical waveguide W may be formed by five different optical signals of different wavelengths separated from each other with the wavelength separation bandwidth B of 10 nm therebetween within a wavelength range of 50 nm corresponding to the FWHM of the optical gain or optical loss of the optical waveguide W (see FIG. 17). For example, a total of five communication channels or optical signals of five different wavelengths may be transmitted through the same optical waveguide W by allocating a communication channel of a central wavelength band λ0, two communication channels formed on one side of the central wavelength band λ0 and separated from the central wavelength band λ0 by the wavelength separation bandwidth B of 10 nm, and two communication channels formed on the other side of the central wavelength band λ0 and separated from the central wavelength band λ0 by the wavelength separation bandwidth B of 10 nm (see FIG. 17).

In an embodiment, different optical signals (different communication channels) transmitted together through the same optical waveguide W may include optical signals having different transmission rates. For example, in an embodiment, a primary channel (a video signal) transmitted at a relatively high transmission rate and an auxiliary channel (an auxiliary signal) transmitted at a relatively low transmission rate may be combined together and transmitted through the same optical waveguide W. In an embodiment, a primary channel (a video signal) transmitted at a relatively high transmission rate may be relatively vulnerable to sensitivity and may not be detected by a receiver because a peak voltage of a signal is attenuated and a width of the signal is widely spread due to distortion of a transmission signal, inter-symbol interference (ISI), delay dispersion, and impedance mismatch, compared to an auxiliary channel (an auxiliary signal) transmitted at a relatively low transmission rate. Accordingly, the primary channel (the video signal) transmitted at a relatively high transmission rate may be formed as an optical signal of a wavelength band adjacent to the central wavelength band λ0 with relatively less signal attenuation within FWHM of an optical gain or optical loss of the optical waveguide W (a wavelength band with a low attenuation rate which is relatively adjacent to the central wavelength band λ0 is assigned to the primary channel with a relatively high transmission rate), and the auxiliary channel (the auxiliary signal) transmitted at a relatively low transmission rate may be formed as an optical signal in a wavelength range is relatively far from the central wavelength band λ0 with relatively high signal attenuation (a wavelength range with a high attenuation rate is assigned relatively far from the central wavelength range λ0 is assigned to the auxiliary channel with a low transmission rate).

In an embodiment, by allocating optical signals of different wavelengths separated by the wavelength separation band B within a wavelength range of FWHM of an optical gain or optical loss of the optical waveguide W to six communication channels (four primary channels-video signals with a high transmission rate and two auxiliary channels-auxiliary signals with low-speed transmission rate) set between a display source and a display sink, the optical signals may be transmitted through at least two optical waveguides W. For example, when the six communication channels are all transmitted through one optical waveguide W, cross-talk may occur between the six communication channels. Accordingly, in an embodiment, the six communication channels established between the display source and the display sink may be transmitted in a distributed manner through two different optical waveguides W, and by combining different communication channels, each having a different transmission rate, it is possible to solve a problem in a high transmission rate (a problem in a high-speed serial link) that a receive is not likely to detect (recognize) a signal because a peak voltage of a signal is attenuated and a width of the signal us widely spread. For example, six communication channels (four primary channels at a high transmission rate and two auxiliary channels at a low transmission rate) established between the display source and the display sink may be grouped into two sets, each including three communication channels including two primary channels (video signals) transmitted at a high transmission rate and one auxiliary channel (an auxiliary signal) transmitted at a low transmission rate, and the two sets of communication channels may be respectively assigned to two different optical waveguides W, and accordingly, a total of six communication channels may be established between the display source and the display sink through the two different optical waveguides W. Referring to FIG. 18, in an embodiment, three communication channels assigned to each optical waveguide W may be formed at different wavelengths separated from each other by a sufficient wavelength separation band B within a wavelength range of FWHM of an optical gain or optical loss of the optical waveguide W (attenuation is reduced to be less than half of a peak value of the central wavelength band λ0 that forms a single peak in a profile of the optical gain or optical loss, for example, -3 dB). For example, a first high-speed channel and a second high-speed channel transmitted at a high transmission rate may be assigned to a wavelength band that is adjacent to the central wavelength band λ0 and has relatively low attenuation, and a low-speed channel transmitted at a relatively low transmission rate may be assigned to a wavelength band that is separated from the central wavelength band λ0 and has relatively high attenuation. In this way, in an embodiment, by allocating the first and second high-speed channels transmitted at a high transmission rate to wavelengths that are relatively adjacent to the central wavelength band λ0, a problem of difficulty in detecting or recognizing a signal in a high-speed channel (high-speed serial link) may be solved (a problem of difficulty in detecting or recognizing a signal due to attenuation and dispersion of the signal in a high-speed channel may be solved). In order to reduce attenuation of the low-speed channel which is predicted to have relatively high attenuation because the low-speed channel is assigned to a wavelength relatively far from the central wavelength band λ0, for example, to sufficiently reduce cross-talk between the first and second high-speed channels, the first and second high-speed channels are respectively assigned to wavelengths asymmetrically located in the left and right half regions relative to the central wavelength band λ0, and the low-speed channel is assigned to a wavelength in the right half region, which is relatively adjacent to the central wavelength band λ0, and is separated from the second high-speed channel by the wavelength separation band B. For example, by assigning a low-speed channel to a wavelength band adjacent to the central wavelength band λ0 like the second high-speed channel to be separated from the second high-speed channel by the wavelength separation band B, cross-talk between the second high-speed channel and the low-speed channel may be greatly reduced. In various embodiments, one of the first and second high-speed channels may be assigned to a wavelength band relatively close to the central wavelength band λ0 in one (for example, the right half region) of the left and right half regions relative to the central wavelength band λ0, and the other of the first and second high-speed channels may be assigned to a wavelength band relatively far from the central wavelength band λ0 in the other region (for example, the left half region) of the left and right half regions. In addition, among the left and right half regions respectively including the wavelengths to which the first and second high-speed channels are respectively assigned, the wavelength to which the low-speed channel is assigned may be located in the region (for example, the right half region) where the wavelength close to the central wavelength band λ0 is located.

In this way, in an embodiment, six communication channels established between a display source and a display sink may be equally assigned to two different optical waveguides W such that only three communication channels are assigned to one optical waveguide W. More specifically, two primary channels (video signals) with a high transmission rate, each being assigned to each optical waveguide W may be assigned to two wavelengths with low attenuation which are relatively close to the central wavelength band λ0 forming a single peak in a profile of an optical gain or optical loss, and one auxiliary channel (an auxiliary signal) with a low transmission rate assigned to the optical waveguide W may be assigned to one wavelength band with high attenuation which is relatively far from the central wavelength band λ0 and may be assigned to a wavelength in the left half region or the right half region which is located relatively close to the central wavelength band λ0.

FIG. 13 is a diagram illustrating a stack structure in which a pair of the 1^{st}-1 optical waveguide W1-1 and the 1^{st}-2 optical waveguide W1-2 included in the first optical waveguide W1 connected to the same display source and a pair of the 2^{nd}-1 optical waveguide W2-1 and the 2^{nd}-2 optical waveguide W2-2 included in the second optical waveguide W2 connected to the same display sink are arranged vertically in the first type of the disclosure, and also illustrating multiple coupler switches CS configured together or interlocked to set three states (a bar state, a partial coupling state, and a cross state) for transmission of optical power crossing between the 1^{st}-1 optical waveguide W1-1 and the 2^{nd}-1 optical waveguide W2-1 and between the 1^{st}-2 optical waveguide W1-2 and the 2^{nd}-2 optical waveguide W2-2.

FIG. 14 is a diagram illustrating a structure in which a pair of the 1^{st}-1 optical waveguide W1-1 and a 1^{st}-2 optical waveguide W1-2 included in the first optical waveguide W1 connected to the same display source and a pair of the 2^{nd}-1 optical waveguide W2-1 and a 2^{nd}-2 optical waveguide W2-2 included in the second optical waveguide W2 connected to the same display sink are horizontally arranged in an interleaved shape, in the second type of the disclosure, and also illustrating coupler switches CSa, CSb, and CSc configured together or interlocked to set the same three states (a bar state, a partial coupling state, and a cross state) for transmission of optical power crossing between the 1^{st}-1 optical waveguide W1-1 and the 2^{nd}-1 optical waveguide W2-1 and between the 1^{st}-2 optical waveguide W1-2 and the 2^{nd}-2 optical waveguide W2-2.

In embodiments including the first type of embodiment (see FIG. 13) and the second type of embodiment (see FIG. 14), the optical waveguide network WN connecting the multiple input ports INP to the multiple output ports OUTP may set a connection state, such as one-to-many or many-to-many, between multiple display sources and multiple display sinks. For example, when considering only a one-to-one connection between the same display source and the same display sink, six communication channels established between the same display source and the same display sink may be formed in two different optical waveguides W. For example, six communication channels may be established between the same display source and the same display sink through two different optical waveguides W connecting two input ports INP connected to the same display source to two output ports OUTP connected to the same display sink.

In an embodiment, in order to implement mapping between the multiple input ports INP and the multiple output ports OUTP, among the first and second optical waveguides W1 and W2 in which transmission of optical powers is implemented in three different states (a bar state, a partial coupling state, and a cross state) by the multiple coupler switches CS, the first optical waveguide W1 may include a pair of the 1^{st}-1 optical waveguide W1-1 and the 1^{st}-2 optical waveguide W1-2, and the second optical waveguide W2 may include a pair of the 2^{nd}-1 optical waveguide W2-1 and the 2^{nd}-2 optical waveguide W2-2. For example, a pair of the 1^{st}-1 optical waveguide W1-1 and the 1^{st}-2 optical waveguide W1-2 forming the first optical waveguide W1 may form six communication channels connected between the same display source and the same display sink, and similarly, a pair of the 2^{nd}-1 optical waveguide W2-1 and the 2^{nd}-2 optical waveguide W2-2 forming the second optical waveguide W2 may form six communication channels connected between the same display source and the same display sink. In addition, in an embodiment, the flow of optical power crossing between the 1^{st}-1 optical waveguide W1-1 and the 2^{nd}-1 optical waveguide W2-1 and the flow of optical power crossing between the 1^{st}-2 optical waveguide W1-2 and the 2^{nd}-2 optical waveguide W2-2 may be controlled together by the same coupler switch CS. For example, a coupling state between the 1^{st}-1 optical waveguide W1-1 and the 2^{nd}-1 optical waveguide W2-1 and a coupling states between the 2^{nd}-1 optical waveguide W2-1 and the 2^{nd}-2 optical waveguide W2-2 may be set to the same coupling state by the same coupler switch CS. For example, in an embodiment, when the same display source connected to a pair of the 1^{st}-1 optical waveguide W1-1 and the 1^{st}-2 optical waveguide W1-2 forming the first optical waveguide W1 and the same display sink connected to a pair of the 2^{nd}-1 optical waveguide W2-1 and the 2^{nd}-2 optical waveguide W2-2 forming the second optical waveguide W2 are mapped as connection targets, a connection between the 1^{st}-1 optical waveguide W1-1 and the 2^{nd}-1 optical waveguide W2-1 and a connection between the 1^{st}-2 optical waveguide W1-2 and the 2^{nd}-2 optical waveguide W2-2 may be set to a partial coupling state or a cross state rather than a bar state by the same coupler switch CS. In contrast to this, when the same display source connected to a pair of the 1^{st}-1 optical waveguide W1-1 and the 1^{st}-2 optical waveguide W1-2 forming the first optical waveguide W1 and the same display sink connected to a pair of the 2^{nd}-1 optical waveguide W2-1 and the 2^{nd}-2 waveguide W2-2 forming the second optical waveguide W2 are mapped as non-connection targets, the connection between the 1^{st}-1 optical waveguide W1-1 and the 2^{nd}-1 optical waveguide W2-1 and the connection between the 1^{st}-2 optical waveguide W1-2 and the 2^{nd}-2 optical waveguide W2-2 may not be set to a bar state rather than a partial coupling state or a cross state by the same coupler switch CS. For example, referring to FIG. 14, among a pair of the 1^{st}-1 optical waveguide W1-1 and the 1^{st}-2 optical waveguide W1-2 included in the first optical waveguide W1 connected to the same display source and a pair of the 2^{nd}-1 optical waveguide W2-1 and the 2^{nd}-2 optical waveguide W2-2 included in the second optical waveguide connected to the same display sink, the coupler switch CSa, which is configured or interlocked to set the same three states (a bar state, a partial coupling state, and a cross state) for transmission of optical power crossing between the 1^{st}-1 optical waveguide W1-1 and the 2^{nd}-1 optical waveguide W2-1 and between the 1^{st}-2 optical waveguide W1-2 and the 2^{nd}-2 optical waveguide W2-2, may be provided, and each of the other coupler switches CSb and CSc may also be configured or interlocked to set the same state for transmission of optical powers between a pair of adjacent optical waveguides.

In this way, in an embodiment, the fact that the first and second optical waveguides W1 and W2 transmit optical powers or set optical coupling efficiency in three different states (a bar state, a partial coupling state, and a cross state) set by the multiple coupler switches CS may mean that the same coupler switch CS sets the transmission of optical power and optical coupling efficiency to one of three different states (a bar, a partial coupling state, and a cross state) between the 1^{st}-1 optical waveguide W1-1 and the 2^{nd}-1 optical waveguide W2-1 forming the second optical waveguide W2 and between the 1^{st}-2 optical waveguide W1-2 forming the first optical waveguide W1 and the 2^{nd}-2 optical waveguide W2-2 forming the second optical waveguide W2.

In this case, a pair of the 1^{st}-1 optical waveguide W1-1 and the 1^{st}-2 optical waveguide W1-2 forming the first optical waveguide W1 connected to the same display source may be provided at positions adjacent to each other. For example, in an embodiment, a pair of the 1^{st}-1 optical waveguide W1-1 and the 1^{st}-2 optical waveguide W1-2 connected to the same display source may be in a vertical stack shape (see FIG. 13) or may be in a horizontally interleaved shape (see FIG. 14) and be adjacent to each other.

In the first type of embodiment (see FIG. 13), a pair of the 1^{st}-1 optical waveguide W1-1 and the 1^{st}-2 optical waveguide W1-2 connected to the same display source may be in a vertical stack shape, and a pair of the 2^{nd}-1 optical waveguide W2-1 and the 2^{nd}-2 optical waveguide W2-2 connected to the same display sink may be in a vertical stack shape. In addition, in this way, when the 1^{st}-1 optical waveguide W1-1 and the 1^{st}-2 optical waveguide W1-2 are at positions adjacent to each other and the 2^{nd}-1 optical waveguide W2-1 and the 2^{nd}-2 optical waveguide W2-2 are at positions adjacent to each other, the transmission of optical powers between the 1^{st}-1 optical waveguide W1-1 forming the first optical waveguide W1 and the 2^{nd}-1 optical waveguide W2-1 forming the second optical waveguide W2 and between the 1^{st}-2 optical waveguide W1-2 forming the first optical waveguide W1 and the 2^{nd}-2 optical waveguide W2-2 forming the second optical waveguide W2 may be set to the same state (any one of a bar state, a partial coupling sate, and a cross state) by the same coupler switch CS. However, as described above, in the first type of embodiment (see FIG. 13), a pair of the 1^{st}-1 optical waveguide W1-1 and the 1^{st}-2 optical waveguide W1-2 connected to the same display source and a pair of the 2^{nd}-1 optical waveguide W2-1 and the 2^{nd}-2 optical waveguide W2-2 connected to the same display sink may also be in a vertical stack shape or may also be in a horizontally interleaved shape.

In the second type of embodiment (see FIG. 14), a pair of the 1^{st}-1 optical waveguide W1-1 and the 1^{st}-2 optical waveguide W1-2 connected to the same display source may be in a horizontally interleaved shape, and a pair of the 2^{nd}-1 optical waveguide W2-1 and the 2^{nd}-2 optical waveguide W2-2 connected to the same display sink may be in a horizontally interleaved shape. In addition, in this way, when the 1^{st}-1 optical waveguide W1-1 and the 1^{st}-2 optical waveguide W1-2 are at positions adjacent to each other and the 2^{nd}-1 optical waveguide W2-1 and the 2^{nd}-2 optical waveguide W2-2 are at positions adjacent to each other, the transmission of optical powers between the 1^{st}-1 optical waveguide W1-1 forming the first optical waveguide W1 and the 2^{nd}-1 optical waveguide W2-1 forming the second optical waveguide W2 and between the 1^{st}-2 optical waveguide W1-2 forming the first optical waveguide W1 and the 2^{nd}-2 optical waveguide W2-2 forming the second optical waveguide W2 may be set to the same state (any one of a bar state, a partial coupling sate, and a cross state) by the same coupler switch CS. However, as described above, in the second type of embodiment (see FIG. 14), a pair of the 1^{st}-1 optical waveguide W1-1 and the 1^{st}-2 optical waveguide W1-2 connected to the same display source and a pair of the 2^{nd}-1 optical waveguide W2-1 and the 2^{nd}-2 optical waveguide W2-2 connected to the same display sink may also be in a vertical stack shape or may also be in a horizontally interleaved shape.

In an embodiment, six communication channels having the same display source as one end may be equally assigned to a pair of the 1^{st}-1 optical waveguide W1-1 and the 1^{st}-2 optical waveguide W1-2 connected to the same display source, and a total of three communication channels including two primary channels (video signals) with a high transmission rate and one auxiliary channel (an auxiliary signal) with a low transmission rate may be assigned to each pair of the 1^{st}-1 optical waveguide W1-1 and the 1^{st}-2 optical waveguide W1-2. Similarly, six communication channels having the same display sink as one end may be equally assigned to a pair of the 2^{nd}-1 optical waveguide W2-1 and the 2^{nd}-2 optical waveguide W2-2 connected to the same display sink, and a total of three communication channels including two primary channels (video signals) with a high transmission rate and one auxiliary channel (an auxiliary signal) with a low transmission rate may be assigned to each pair of the 2^{nd}-1 optical waveguide W2-1 and the 2^{nd}-2 optical waveguide W2-2.

In an embodiment, the fact that the same coupler switch CS sets the same state (one of a bar, a partial coupling state, and a cross state) between the 1^{st}-1 optical waveguide W1-1 forming the first optical waveguide W1 and the 2^{nd}-1 optical waveguide W2-1 forming the second optical waveguide W2, and between the 1^{st}-2 optical waveguide W1-2 forming the first optical waveguide W1 and the 2^{nd}-2 optical waveguide W2-2 forming the second optical waveguide W2 may include, for example, the fact that a single coupler switch CS formed as a physically same object sets a coupling state between the 1^{st}-1 optical waveguide W1-1 and the 1^{st}-2 optical waveguide W1-2 and a coupling state between the 2^{nd}-1 optical waveguide W2-1 and the 2^{nd}-2 optical waveguide W2-2 as the same coupling state. Also, even when a coupling state between the 1^{st}-1 optical waveguide W1-1 and the 1^{st}-2 optical waveguide W1-2 and a coupling state between the 2^{nd}-1 optical waveguide W2-1 and the 2^{nd}-2 optical waveguide W2-2 are set to the same coupling state by the coupler switches CS which are physically separated from each other, the coupler switches CS physically separated from each other may be electrically connected to each other such that the coupler switches CS may receive the same control signal (a control signal including the first and second coupler control bits b1 and b2).

In an embodiment, the optical waveguide network WN connecting the multiple input ports INP to the multiple output ports OUTP may include four primary channels for transmitting image signals and two auxiliary channels for transmitting auxiliary signals to transmit the image signals and auxiliary signals between at least one display source connected to the multiple input ports INP and at least one display sink connected to the multiple output ports OUTP. As described above, a total of six channels may be formed in two optical waveguides W, each including two primary channels and one auxiliary channel. As illustrated in FIG. 18, in consideration of signal attenuation, different wavelengths may be assigned to primary channels with a high transmission rate and auxiliary channels with a low transmission rate included in each optical waveguide W.

In various embodiments, the optical waveguide network WN may provide six channels for video signals and auxiliary signals. A combination of channels with different transmission rates (a combination of a channel with a relatively high transmission rate and a channel with a relatively low transmission rate) may be assigned to each of the optical waveguides W by considering a problem that it is difficult to detect a signal due to effects of signal attenuation, for example, signal attenuation and dispersion in a channel with a high transmission rate (a high-speed serial link). For example, by assigning a wavelength band adjacent to the central wavelength band λ0 forming a single peak to a channel with a relatively high transmission rate and assigning a wavelength band relatively far from the central wavelength band λ0 forming a single peak to a channel with a relatively low transmission rate within a wavelength range of FWHM in a profile of an optical gain or optical loss of the optical waveguide W, the problem of signal detection being difficult due to signal attenuation in a high-speed serial link may be solved, cross-talk between different wavelengths may be reduced through wavelength division multiplexing, and multiple communication channels may be transmitted through a single optical waveguide W.

FIG. 19 is a diagram illustrating four channels including two channels with a high transmission rate and two channels with a low transmission rate, which are included in the optical waveguide W, and assigned to different wavelengths depending on transmission rates, according to an embodiment.

FIG. 20 is a diagram illustrating three channels including one channel with a high transmission rate and two channels with a low transmission rate, which are included in the optical waveguide W, and assigned to different wavelengths depending on transmission rates, according to an embodiment.

FIG. 21 illustrates a profile showing optical loss or attenuation depending on wavelength of an optical fiber F (a silica-based optical fiber).

As illustrated in FIG. 19, in an embodiment in which four different communication channels are formed through a single optical waveguide W, two channels with a relatively high transmission rate may be combined with two channels with a low transmission rate. In this case, the two channels with a high transmission rate may be symmetrically assigned to wavelengths that are respectively in a left half region and a right half region of the central wavelength band λ0 and are relatively close to the central wavelength band λ0, and the two channels with a low transmission rate may be symmetrically assigned to wavelengths that are respectively in the left half region and the right half region of the central wavelength band λ0 and are relatively far from the central wavelength band λ0.

As illustrated in FIG. 20, in an embodiment in which three different communication channels are formed in a single optical waveguide W, one channel with a high transmission rate may be assigned to the central wavelength band λ0 forming a single peak, and two channels with relatively low transmission rates may be assigned to wavelength bands symmetrically and respectively arranged in a left half region and a right half region around the central wavelength band λ0 forming a single peak. For example, in an embodiment in which an odd number of communication channels, such as three or five communication channels, are formed through a single optical waveguide W (see FIGS. 17 and 20), one channel with a high transmission rate may be assigned to the central wavelength band λ0 with the least signal attenuation.

In an embodiment, in a profile of an optical gain or optical loss of the optical waveguide W, the central wavelength band λ0 forming a single peak may be set to a wavelength band forming a window with relatively small optical loss with reference to a profile (see FIG. 21) of optical loss of the optical fiber F connected to the input port INP of the optical waveguide network WN formed by the optical waveguides W, and may be set to a wavelength band of, for example, 850 nm, 1310 nm, or 1550 nm. In an embodiment, within a wavelength range of about 50 nm forming FWHM from the central wavelength band λ0 set to the wavelength band forming the window with relatively small optical loss, optical loss of the optical fiber F may be reduced for optical signals of wavelength bands selected with the wavelength separation band B therebetween.

In an embodiment, in a profile of an optical gain or optical loss of the optical waveguide W, assigning wavelengths separated from each other with the wavelength separation band B therebetween within a wavelength band forming FWHM to different communication channels may mean assigning different wavelengths with the least wavelength separation band B (for example, 10 nm) therebetween for reducing cross-talk between communication channels (optical signals) of different wavelengths, and may mean that assigning different wavelengths with the least wavelength separation band B (for example, 10 nm) therebetween for reducing cross-talk therebetween, rather than meaning that the wavelength separation band B between the different wavelengths assigned to different communication channels is constantly limited.

A photonic circuit according to another aspect of the disclosure includes the optical fiber F configured to transmit an optical signal, the input port INP forming a transmitting end, the output port OUTP forming a receiving end opposite to the transmitting end, and the optical waveguide network WN connecting the input port INP to the output port OUTP, which are coupled to the optical fiber F, and the coupler switch CS configured to control transmission of optical power or optical coupling between the first optical waveguide W1 and the second optical waveguide W2 which are adjacent to each other and form the optical waveguide network WN and configured to control coupling efficiency of a signal between the first optical waveguide W1 and the second optical waveguide W2 to transmit different optical powers in one of states including a through-state or a bar state in which there is substantially no crossing of optical power between the first optical waveguide W1 and the second optical waveguide W2, a dividing (splitting) state or a partial coupling state corresponding to partial remaining and partial crossing of optical power between the first optical waveguide W1 and the second optical waveguide W2, and a drop state or a cross state corresponding to full crossing of optical power between the first optical waveguide W1 and the second optical waveguide W2.

The first optical waveguide W1 includes a pair of the 1^{st}-1 optical waveguide W1-1 and the 1^{st}-2 optical waveguide W1-2, and the second optical waveguide W2 includes a pair of the 2^{nd}-1 optical waveguide W2-1 and the 2^{nd}-2 optical waveguide W2-2.

At least one optical waveguide among the 1^{st}-1 optical waveguide W1-1, the 1^{st}-2 optical waveguide W1-2, the 2^{nd}-1 optical waveguide W2-1, and the 2^{nd}-2 optical waveguide W2-2 has a profile of an optical gain or optical loss with a full-width at half maximum (FWHM) that is attenuated to half a peak value of the central wavelength band λ0 on both sides of the central wavelength band λ0 forming a single peak, and the at least one optical waveguide W transmits different optical signals of different wavelength bands separated from each other with the wavelength separation bandwidth B between the wavelength bands considering a resolution for separation between the different wavelength bands forming different communication channels to prevent cross-talk within a wavelength range forming the FWHM.

For example, in an embodiment, the optical waveguide network WN may connect the multiple input ports INP to the multiple output ports OUTP. In this case, each of the optical waveguides W forming the optical waveguide network WN, that is, each optical waveguide W (corresponding to a single optical waveguide in the claims) among the 1^{st}-1 optical waveguide W1-1 and the 1^{st}-2 optical waveguide W1-2 forming the first optical waveguide W1 and the 2^{nd}-1 optical waveguide W2-1 and the 2^{nd}-2 optical waveguide W2-2 forming the second optical waveguide W2 may form three different communication channels including two high-speed channels (image signal transmission) with a high transmission rate and one low-speed channel (auxiliary signal transmission) with a low transmission rate. Referring to FIG. 13, the 1^{st}-1 optical waveguide W1-1 and the 1^{st}-2 optical waveguide W1-2 forming the waveguide W1 may transmit two high-speed channels with a relatively high transmission rate and one low-speed channel with a relatively low transmission rate. Accordingly, the 1^{st}-1 optical waveguide W1-1 and the 1^{st}-2 optical waveguide W2-1 may form together a total of six communication channels including four high-speed channels for image signals and two low-speed channels for auxiliary signals between the same display source and the same display sink. In addition, referring to FIG. 13 (first type), the 2^{nd}-1 optical waveguide W2-1 and the 2^{nd}-2 optical waveguide W2-2 may each transmit two high-speed channels with a relatively high transmission rate and one low-speed channel with a relatively low transmission rate, and accordingly, the 2^{nd}-1 optical waveguide W2-1 and the 2^{nd}-2 optical waveguide W2-2 may form together a total of six communication channels including four high-speed channels for another image signals and two low-speed channels for another auxiliary signals between another identical display source and another identical display sink.

Referring to FIG. 14 (second type), the 1^{st}-1 optical waveguide W1-1 and the 1^{st}-2 optical waveguide W2-1 may each transmit two high-speed channels with a relatively high transmission rate and one auxiliary channel with a relatively low transmission rate, and accordingly, the 1^{st}-1 optical waveguide W1-1 and the 1^{st}-2 optical waveguide W1-2 may form together a total of six communication channels including four high-speed channels for image signals input from the same display source and two low-speed channels for auxiliary signals input from the same display source. In addition, referring to FIG. 14 (second type), the 2^{nd}-1 optical waveguide W2-1 and the 2^{nd}-2 optical waveguide W2-2 may each transmit two high-speed channels with a relatively high transmission rate and one low-speed channel with a relatively low transmission rate, and accordingly, the 2^{nd}-1 optical waveguide W2-1 and the 2^{nd}-2 optical waveguide W2-2 may form together a total of six communication channels including four high-speed channels for image signals output to the same display sink and two low-speed channels for auxiliary signals output to the same display sink.

Referring to FIG. 13 (first type) and FIG. 14 (second type), in an embodiment, the optical waveguide network may be a 2Nx2N optical waveguide network that maps 2N input ports to 2N output ports, the input port INP and a display source may form a 2:1 connection such that video signals and auxiliary signals output from N display sources are input to the 2N input ports INP, the output port OUTP and a display sink may form a 2:1 connection such that video signals and auxiliary signals from the 2N output ports OUTP are output to N display sinks, and a pair of a video signal and an auxiliary signal input through the input port INP connected to a same display source may be routed or distributed to the output port OUTP connected to a same display sink, according to a control signal applied to the coupler switch CS to implement transmission of different optical powers between the first optical waveguide W1 and the second optical waveguide W2 adjacent to each other between the input port INP and the output port OUTP. To this end, the transmission of optical power crossing between the 1^{st}-1 optical waveguide W1-1 and the 2^{nd}-1 optical waveguide W2-1 and the transmission of optical power crossing between the 1^{st}-2 optical waveguide W1-2 and the 2^{nd}-2 optical waveguide W2-2 may be controlled together from the same coupling switch CS.

Referring to FIG. 13 (first type), the optical waveguide network WN may be an NxN optical waveguide network WN that maps N input ports INP to N output ports OUTP, the 1^{st}-1 optical waveguide W1-1 and the 2^{nd}-1 optical waveguide W2-1 may extend adjacently between two different input ports INP among the N input ports INP and two different output ports PUTP among the N output ports OUTP, the 1^{st}-2 optical waveguide W1-2 and the 2^{nd}-2 optical waveguide W2-2 may extend adjacently between two other different input ports INP among the N input ports INP and two other different output ports OUTP among the N output ports OUTP, and a flow of the optical power crossing between the 1^{st}-1 optical waveguide W1-1 and the 2^{nd}-1 optical waveguide W2-1 and a flow of the optical power crossing between the 1^{st}-2 optical waveguide W1-2 and the 2^{nd}-2 optical waveguide W2-2 may be controlled together by the coupler switch CS.

Referring to FIG. 13 (first type), a pair of the 1^{st}-1 optical waveguide W1-1 and the 1^{st}-2 optical waveguide W1-2 may connect the input ports INP connected to the same display source to the output ports OUTP connected to the same display sink, and similarly, a pair of the 2^{nd}-1 optical waveguide W2-1 and the 2^{nd}-2 optical waveguide W2-2 may connect the input ports INP connected to another identical display source to the output ports OUTP connected to another identical display sink. For example, the 1^{st}-1 optical waveguide W1-1 and the 1^{st}-2 optical waveguide W1-2 may transmit video signals including video data and auxiliary signals including auxiliary data between the same display source and the same display sink, and the 2^{nd}-1 optical waveguide W2-1 and the 2^{nd}-2 optical waveguide W2-2 may transmit video signals including another video data and auxiliary signals including another auxiliary data between another identical display source and another identical display sink.

Referring to FIG. 14 (second type), the optical waveguide network WN may be an NxN optical waveguide network that maps N input ports INP to N output ports OUTP.

Also, the optical waveguide network WN may include the N 1^{st}-1 optical waveguides W1-1 and 1^{st}-2 optical waveguides W1-2 (the first optical waveguide W1) connected to the input ports INP, and the N 2^{nd}-1 optical waveguides W2-1 and 2^{nd}-2 optical waveguides W2-2 (the second optical waveguide W2) connected to the output ports OUTP. That is, in an embodiment, the optical waveguide W connected to the input ports INP may be defined as the first optical waveguide W1, and the optical waveguide W connected to the output ports OUTP may be defined as the second optical waveguide W2. In this case, the flow of optical power crossing between the 1^{st}-1 optical waveguide W1-1 and the 2^{nd}-1 optical waveguide W2-1 and the flow of optical power crossing between the 1^{st}-2 optical waveguide W1-2 and the 2^{nd}-2 optical waveguide W2-2 may be controlled together by the same coupler switch CS.

Referring to FIG. 14 (second type), a pair of the 1^{st}-1 optical waveguide W1-1 and the 1^{st}-2 optical waveguide W1-2 and a pair of the 2^{nd}-1 optical waveguide W2-1 and the 2^{nd}-2 optical waveguide W2-2 may connect the input ports INP connected to the same display source to the output ports OUTP connected to the same display sink. For example, the 1^{st}-1 optical waveguide W1-1 and the 1^{st}-2 optical waveguide W1-2 may transmit a video signal including video data input from the same display source and an auxiliary signal including auxiliary data input from the same display source, and the 2^{nd}-1 optical waveguide W2-1 and the 2^{nd}-2 optical waveguide W2-2 may transmit a video signal including video data output to the same display sink and an auxiliary signal including auxiliary data output to the same display sink.

FIG. 22 is a view illustrating edge coupling between the optical fiber F through which an optical signal is transmitted and the input port INP (an edge coupler), which is different from the grating coupling or surface coupling illustrated in FIGS. 9A and 9B.

In an embodiment, the input port INP may include an edge coupler that forms in-plane coupling with the optical fiber F. In various embodiments, depending on types of the optical coupler according to an arrangement of the input port INP and the optical fiber F, the optical fiber F may be arranged on the base substrate S on which the input port INP is formed, for example, the optical fiber F may be arranged at a level outside the base substrate S on which the input port INP is formed (out-of-plane coupling, surface coupling, or grating coupling). Depending on a state of the optical fiber F with respect to the base substrate S, the optical fiber F may be arranged in a downward state toward the base substrate S to form vertical fiber coupling with the base substrate S on which the input port INP is formed (see FIG. 9A), the optical fiber F may be arranged in a state parallel to the base substrate S to form horizontal fiber coupling with the base substrate S on which the input port INP is formed (see FIG. 9B), or the optical fiber F may be arranged (butt-coupled) to face a cross-section (facet) of an optical waveguide of the base substrate S to form in-plane coupling, and accordingly, an optical signal from the optical fiber F may be guided along the optical waveguide W (a Si Waveguide) of the base substrate S. For example, as illustrated in FIG. 11, when the optical fiber F is directly butt-coupled to an optical waveguide of the base substrate S in edge coupling for implementing optical coupling between the optical waveguide and the optical fiber F having a core with a diameter of about 10.4 µm and a cross-section of 0.45 µm x 0.22 µm, an optical coupling loss of about 30 dB may occur, and accordingly, in order to increase optical coupling efficiency between the optical fiber F and the optical waveguide W of the base substrate S, a core of the optical fiber F (a central region with a relatively high refractive index of the optical fiber F having a core formed in the center of the optical fiber F and cladding surrounding the core) may be optically aligned with the optical waveguide W (a Si waveguide) of the base substrate S forming optical coupling with the optical fiber F. The optical fiber F may be coupled to the optical waveguide of the base substrate S by a mode-matching structure, such as an inverted taper structure or optical lens structure to reduce optical mismatch and achieve mode matching.

FIGS. 23 and 24 illustrate different communication protocols, respectively USB communication and Thunderbolt communication, to which the optical waveguide network WN of the disclosure may be applied according to embodiments.

In the disclosure, a one-to-one or one-to-many connection may be made between a display source and a display sink of an HDMI or display port as one type in which signal distribution or mapping is made by the optical waveguide network WN connecting the multiple input ports INP to the multiple output ports OUTP. However, the optical waveguide network WN according to an embodiment may be applied not only to transmission of an HDMI or display port including a video signal or both a video signal and an auxiliary signal, but also to various communication protocols, such as the universal serial bus (USB) and Thunderbolt. For example, as illustrated in FIG. 23, the optical waveguide network WN may support a super (full) speed transmission lane (super speed TX1 +, TX1-, and differential pair 1), a super (full) speed reception lane (super speed RX2+, RX2-, and differential pair 2), a high speed transmission lane (high speed D+, D-, and differential pair), and so on. For example, the optical waveguide network WN may support USB communication (for example, alternative mode supported by USB-C type and a DP alt mode) that is multi-channel signal transmission, or may support two transmission lanes and two reception lanes, or may generally support three transmission lanes and one reception lane as illustrated in FIG. 24. The technical features of the disclosure described above may be substantially identically or similarly applied to the Thunderbolt communication in which signals may be transmitted through multiple channels.

Although the disclosure is described with reference to the embodiments illustrated in the accompanying drawings, the embodiments are only examples, and those skilled in the art will understand that various modifications and equivalent other embodiments may be derived therefrom.

According to the disclosure, multiple communication channels may be provided in a single optical waveguide through wavelength division multiplexing, and by combining a primary channel including image signals which are optical signals transmitted in different transmission rates and at a relatively high transmission rate and an auxiliary channel including auxiliary signals transmitted at a relatively low transmission rate for setting the primary channel, the signals may be transmitted through the same optical waveguide, and accordingly, it is possible to solve a sensitivity problem in a high-speed serial link that a receiver may not detect signals because peaks values of the signals are attenuated and widths of the signals are widely spread due to distortion of the transmitted signals, intersymbol interference (ISI), delay dispersion, and impedance mismatch. By assigning a wavelength band adjacent to a central wavelength band in which a single peak is formed to a high-speed channel in a profile of an optical gain or optical loss of an optical waveguide, and assigning a wavelength band relatively far from the central wavelength band to a low-speed channel where signal attenuation caused in the high-speed serial link is relatively less, it is possible to provide multiple communication channels of different wavelengths to a single optical waveguide, accurately detect or recognize signals by solving a problem of signal attenuation and so on in a high-speed serial link, and provide a sufficient wavelength separation bandwidth for preventing cross-talk between different communication channels. Also, in an embodiment, by providing a total of six communication channels, which include four primary channels (high-speed channels) including video signals transmitted between a display source and a display sink and two auxiliary channels (low-speed channels) including auxiliary signals for setting the primary channels, to different optical waveguides each of which includes two high-speed channels and one low-speed channel, by assigning the two high-speed channels around a central wavelength band forming a single peak respectively to a wavelength band adjacent to the central wavelength band and a wavelength band far from the central wavelength band in a profile of an optical gain or optical loss of an optical waveguide, and by assigning the one low-speed channel to a region, in which the wavelength band of the high-speed channel closer to the central wavelength band is located, among the left half region and the right half region of the central wavelength band, it is possible to accurately detect or recognize signals by solving a problem of signal attenuation in a high-speed serial link and to provide a sufficient wavelength separation bandwidth for preventing cross-talk between communication channels of different wavelength bands.

## Claims

1. A photonic circuit comprising:
an optical fiber configured to transmit an optical signal;
an input port forming a transmitting end, an output port forming a receiving end opposite the transmitting end, and an optical waveguide network connecting the input port to the output port, which are coupled to the optical fiber; and
a coupler switch configured to control transmission of optical power or optical coupling between a first optical waveguide and a second optical waveguide which are adjacent to each other and form the optical waveguide network and to control coupling efficiency of a signal between the first optical waveguide and the second optical waveguide to transmit different optical powers in one of states including a through-state or a bar state in which there is substantially no crossing of optical power between the first optical waveguide and the second optical waveguide, a dividing (splitting) state or a partial coupling state corresponding to partial remaining and partial crossing of optical power between the first optical waveguide and the second optical waveguide, and a drop state or a cross state corresponding to full crossing of optical power between the first optical waveguide and the second optical waveguide,
wherein the first optical waveguide includes a pair of a 1^{st}-1 optical waveguide and a 1^{st}-2 optical waveguide, and the second optical waveguide includes a pair of a 2^{nd}-1 optical waveguide and a 2^{nd}-2 optical waveguide,
at least one optical waveguide among the 1^{st}-1 optical waveguide, the 1^{st}-2 optical waveguide, the 2^{nd}-1 optical waveguide, and the 2^{nd}-2 optical waveguide has a profile of an optical gain or optical loss with a full-width at half maximum (FWHM) that is attenuated to half a peak value of a central wavelength band on both sides of the central wavelength band forming a single peak, and
the at least one optical waveguide transmits different optical signals of different wavelength bands separated from each other with a wavelength separation bandwidth between the wavelength bands considering a resolution for separation between the different wavelength bands forming different communication channels to prevent cross-talk within a wavelength range forming the FWHM.

2. The photonic circuit of claim 1, wherein the resolution for separation between the different wavelength bands forming the different communication channels corresponds to a resolution of a wavelength selection filter for separating the different wavelength bands transmitted from the at least one waveguide, or a value obtained by adding a tolerance to the resolution of the wavelength selection filter.

3. The photonic circuit of claim 1, wherein the at least one optical waveguide transmits optical signals of different wavelength bands forming a high-speed channel and a low-speed channel with different transmission rates.

4. The photonic circuit of claim 3, wherein
the optical signals transmitted together through the at least one optical waveguide form a high-speed channel with a relatively high transmission rate and a low-speed channel with a relatively low transmission rate, and
in the profile of the optical gain or optical loss of the optical waveguide, a wavelength band of an optical signal assigned to the high-speed channel is relatively close to the central wavelength band having a peak value and has a low attenuation rate, and a wavelength band of an optical signal assigned to the low-speed channel is relatively far from the central wavelength band having the peak value and has a high attenuation rate.

5. The photonic circuit of claim 1, wherein the at least one optical waveguide transmits three optical signals of different wavelength bands separated from each other with a wavelength separation bandwidth between the different wavelength bands within a wavelength range forming the FWHM.

6. The photonic circuit of claim 5, wherein
the three optical signals transmitted through the at least one optical waveguide form a first high-speed channel and a second high-speed channel with relatively high transmission rates, and a low-speed channel with a relatively low transmission rate, and
in the profile of the optical gain or optical loss of the optical waveguide, a wavelength band of the optical signal assigned to the second high-speed channel is closest to the central wavelength band having the peak value and has a lowest attenuation rate, a wavelength band of the optical signal assigned to the low-speed channel is far from the central wavelength band and has a highest attenuation rate, and a wavelength band of the optical signal assigned to the first high-speed channel is farther from the central wavelength band than the wavelength band of the optical signal assigned to the second high-speed channel and is closer than the wavelength band of the optical signal assigned to the low-speed channel and has an intermediate attenuation rate.

7. The photonic circuit of claim 6, wherein
the wavelength band of the optical signal assigned to the first high-speed channel, the wavelength band of the optical signal assigned to the second high-speed channel, and the wavelength band of the optical signal assigned to the low-speed channel are assigned to positions asymmetrical with respect to the central wavelength band,
the wavelength band of the optical signal assigned to the second high-speed channel and the wavelength band of the optical signal assigned to the low-speed channel are assigned to a wavelength range of one of a left half region and a right half region around the central wavelength band having the peak value, and
the wavelength band of the optical signal assigned to the first high-speed channel is assigned to a wavelength range of another region of the left half region and the right half region around the central wavelength band having the peak value.

8. The photonic circuit of claim 7, wherein the at least one optical waveguide transmits both video signals including video data and forming the first high-speed channel and the second high-speed channel with relatively high transmission rates, and auxiliary signals forming the low-speed channel with a relatively low transmission rate and including auxiliary data.

9. The photonic circuit of claim 8, wherein
each of the 1^{st}-1 optical waveguide and the 1^{st}-2 optical waveguide transmits two high-speed channels with a relatively high transmission rate and one low-speed channel with a relatively low transmission rate, and the 1^{st}-1 optical waveguide and the 1^{st}-2 optical waveguide form a total of six communication channels including four high-speed channels for video signals and two low-speed channels for auxiliary signals between a display source and a display sink, and
each of the 2^{nd}-1 optical waveguide and the 2^{nd}-2 optical waveguide transmits two high-speed channels with a relatively high transmission rate and one low-speed channel with a relatively low transmission rate, and the 2^{nd}-1 optical waveguide and the 2^{nd}-2 optical waveguide form a total of six communication channels including four high-speed channels for other video signals and two low-speed channels for other auxiliary signals between another display source and another display sink.

10. The photonic circuit of claim 8, wherein
each of the 1^{st}-1 optical waveguide and the 1^{st}-2 optical waveguide transmits two high-speed channels with a relatively high transmission rate and one low-speed channel with a relatively low transmission rate, and the 1^{st}-1 optical waveguide and the 1^{st}-2 optical waveguide form a total of six communication channels including four high-speed channels for video signals input from the display source and two low-speed channels for auxiliary signals input from the display source, and
each of the 2^{nd}-1 optical waveguide and the 2^{nd}-2 optical waveguide transmits two high-speed channels with a relatively high transmission rate and one low-speed channel with a relatively low transmission rate, and the 2^{nd}-1 optical waveguide and the 2^{nd}-2 optical waveguide form a total of six communication channels including four high-speed channels for video signals output to the display sink and two low-speed channels for other auxiliary signals output to the display sink.

11. The photonic circuit of claim 1, wherein
the optical waveguide network is a 2Nx2N optical waveguide network that maps 2N input ports to 2N output ports,
the input port and a display source form a 2:1 connection such that video signals and auxiliary signals output from N display sources are input to the 2N input ports,
the output port and a display sink form a 2:1 connection such that video signals and auxiliary signals from the 2N output ports are output to N display sinks, and
a pair of a video signal and an auxiliary signal input through the input ports connected to a same display source is routed or distributed to the output ports connected to a same display sink, according to a control signal applied to the coupler switch to implement transmission of different optical powers between the first optical waveguide and the second optical waveguide adjacent to each other between the input port and the output port.

12. The photonic circuit of claim 1, wherein both transmission of optical power crossing between the 1^{st}-1 optical waveguide and the 2^{nd}-1 optical waveguide and transmission of optical power crossing between the 1^{st}-2 optical waveguide and the 2^{nd}-2 optical waveguide are controlled by the same coupler switch.

13. The photonic circuit of claim 12, wherein
an input port and an output port, which are provided respectively on a first side and a second side facing each other and included in a base substrate on which the optical waveguide network is formed, are connected to each other by the optical waveguide network, and
the first optical waveguide and the second optical waveguide include coupling sections extending from the input port toward the output port and extending parallel at a relatively close position, and phase shift sections extending parallel at a relatively far position.

14. The photonic circuit of claim 13, wherein in each of the phase shift sections, a coupler switch is formed on at least one of the first optical waveguide and the second optical waveguide to set a voltage that induces a phase difference or phase mismatch between the first optical waveguide and the second optical waveguide by applying an external electric field.

15. The photonic circuit of claim 14, wherein in each of the coupling sections, transmission or optical coupling efficiency of optical power crossing between the first optical waveguide and the second optical waveguide is differentially formed according to a phase difference or phase mismatch between the first optical waveguide and the second optical waveguide which is caused by a voltage set by the coupler switch in the phase shift section.

16. The photonic circuit of claim 14, wherein the coupler switch receives a first coupler control bit and a second coupler control bit for applying voltages of three different levels to cause the phase differences or phase mismatch between the first optical waveguide and the second optical waveguide to implement transmission of different optical powers in the through-state or the bar state in which there is substantially no crossing, the dividing state or the partial coupling state corresponding to the partial remaining and the partial crossing, and the drop state or the cross state corresponding to the full crossing, between the first optical waveguide and the second optical waveguide.

17. The photonic circuit of claim 16, wherein, depending on voltages set by the coupler switch,
i) when a zero voltage is set by the coupler switch, transmission of optical power in the drop state or the cross state corresponding to the full crossing of the optical power is implemented between the first optical waveguide and the second optical waveguide from the input port to the output port,
ii) when a maximum voltage is set by the coupler switch, transmission of optical power in the through-state or the bar state with substantially no crossing of the optical power is implemented between the first optical waveguide and the second optical waveguide from the input port to the output port, and
iii) when a voltage between the zero voltage and the maximum voltage is set by the coupler switch, transmission of the optical power in the dividing state corresponding to the partial remaining and the partial crossing of the optical power is implemented between the first optical waveguide and the second optical waveguide from the input port to the output port.

18. The photonic circuit of claim 16, wherein,
when each of the first coupler control bit and the second coupler control bit is bit 0, transmission of optical power in the drop state or the cross state corresponding to the full crossing of the optical power is implemented between the first optical waveguide and the second optical waveguide from the input port to the output port while achieving phase matching,
when the first coupler control bit is bit 1 and the second coupler control bit is bit 0, transmission of optical power in the dividing state or the partial coupling state corresponding to the partial remaining and the partial crossing of the optical power is implemented between the first optical waveguide and the second optical waveguide from the input port to the output port while achieving a phase mismatch for blocking partial transmission of the optical power, and
when each of the first coupler control bit and the second coupler control bit is bit 1, transmission of optical power in the through-state or the bar state with substantially no crossing of the optical power is implemented between the first optical waveguide and the second optical waveguide while achieving a phase mismatch for blocking full transmission of the optical power between the first optical waveguide and the second optical waveguide from the input port to the output port.

19. The photonic circuit of claim 12, wherein
the optical waveguide network is an NxN optical waveguide network that maps N input ports to N output ports,
the 1^{st}-1 optical waveguide and the 2^{nd}-1 optical waveguide extend adjacently between two different input ports among the N input ports and two different output ports among the N output ports,
the 1^{st}-2 optical waveguide and the 2^{nd}-2 optical waveguide extend adjacently between two other different input ports among the N input ports and two other different output ports among the N output ports, and
a flow of the optical power crossing between the 1^{st}-1 optical waveguide and the 2^{nd}-1 optical waveguide and a flow of the optical power crossing between the 1^{st}-2 optical waveguide and the 2^{nd}-2 optical waveguide are controlled together by the same coupler switch.

20. The photonic circuit of claim 12, wherein
an input port and an output port, which are provided respectively on a first side and a second side in contact with each other and crossing each other at an edge of a base substrate on which the optical waveguide network is formed, are connected to each other by the optical waveguide network, and
the optical waveguide network includes a coupler switch including a movable coupler that performs forward and reverse motions along an approaching direction toward an intersection point between the first optical waveguide and the second optical waveguide, or a retreating direction away from the intersection point to control the transmission or optical coupling efficiency of the optical power crossing between the first optical waveguide connected to the input port and the second optical waveguide connected to the output port.

21. The photonic circuit of claim 20, wherein the movable coupler
i) implements the transmission of the optical power in the through-state or the bar state with substantially no crossing of the optical power between the first waveguide connected to the input port and the second waveguide connected to the output port at a first position farthest from the intersection point between the first optical waveguide and the second optical waveguide,
ii) implements the transmission of the optical power in the drop state or the cross state corresponding to the full crossing of the optical power between the first waveguide connected to the input port and the second waveguide connected to the output port at a third position closest to the intersection point between the first optical waveguide and the second optical waveguide, and
iii) implements the transmission of the optical power in the dividing sate or the partial coupling state corresponding to the partial remaining and the partial crossing of the optical power at a second position between the first position farthest from the intersection point and the third position closest to the intersection point.

22. The photonic circuit of claim 21, wherein the coupler switch receives a first coupler control bit and a second coupler control bit for applying control voltages of three different levels such that the movable coupler is set to the third position closest to the first position farthest from the intersection point between the first optical waveguide and the second optical waveguide.

23. The photonic circuit of claim 22, wherein,
when each of the first coupler control bit and the second coupler control bit is bit 0, the movable coupler is set to the first position farthest from the intersection point between the first optical waveguide and the second optical waveguide,
when the first coupler control bit is bit 1 and the second coupler control bit is bit 0, the movable coupler is set to the second position, and
when each of the first coupler control bit and the second coupler control bit is bit 1, the movable coupler is set to the third position closest to the intersection point.

24. The photonic circuit of claim 20, wherein the movable coupler includes:
a first coupling rib extending parallel to the first optical waveguide to form evanescent coupling with the first optical waveguide; and
a second coupling rib extending parallel to the second optical waveguide to form evanescent coupling with the second optical waveguide.

25. The photonic circuit of claim 20, wherein
an electric field leaking between the first optical waveguide and the movable coupler has an amplitude that decreases from the first optical waveguide toward the movable coupler, and
an electric field leaking between the second optical waveguide and the movable coupler has an amplitude that decreases from the movable coupler toward the second optical waveguide.
